(19) **Europäisches Patentamt / European Patent Office / Office européen des brevets**

(11) **EP 3 848 776 A1**

(12) **EUROPEAN PATENT APPLICATION**
published in accordance with Art. 153(4) EPC

(43) Date of publication:
**14.07.2021 Bulletin 2021/28**

(21) Application number: **19872996.4**

(22) Date of filing: **04.09.2019**

(51) Int Cl.:
**G06F 1/3212** (2019.01)

(86) International application number:
**PCT/CN2019/104292**

(87) International publication number:
**WO 2020/078135 (23.04.2020 Gazette 2020/17)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **15.10.2018 CN 201811198978**

(71) Applicant: **HUAWEI TECHNOLOGIES CO., LTD.**
**Shenzhen, Guangdong 518129 (CN)**

(72) Inventors:
- **CHEN, Qiulin**
  **Shenzhen, Guangdong 518129 (CN)**
- **ZHOU, Zhenkun**
  **Shenzhen, Guangdong 518129 (CN)**
- **XU, Yuqiong**
  **Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **RESOURCE SCHEDULING METHOD AND COMPUTER DEVICE**

(57) This application provides a resource scheduling method and apparatus, a computer device, and the like. According to this method, a resource management and control policy is determined and implemented with an aim of improving overall user experience. The overall user experience is determined based on weights of performance, a temperature, and power consumption in a current application scene of a device, and user experience of the performance, the temperature, and the power consumption. The scheduling method that converges three factors: the performance, the temperature, and the power consumption can be used to avoid a seesaw effect that may be caused by scheduling of a single factor, and improve comprehensive experience of a user on a device.

FIG. 8

Printed by Jouve, 75001 PARIS (FR)

**Description**

**TECHNICAL FIELD**

This application relates to computer technologies, and in particular, to a resource management or resource scheduling method and apparatus, a computer device, a computer storage medium, a computer program product, and the like.

**BACKGROUND**

In terminal devices represented by smartphones, terminal performance is significantly improved with high-speed development of chip performance. However, power (equivalent to standby duration) and heat generation are key problems that reduce user experience. How to effectively achieve a balance among performance, power consumption, and heat generation becomes the core of improving competitiveness of the terminal devices.

Using Android (Android®) mobile phones as an example, currently, performance, power consumption, and heat are separately managed and controlled. For performance management and control, frequencies of a central processing unit (central processing unit, CPU), a graphics processing unit (graphic processing unit, GPU), and a double data rate (double data rate, DDR) memory are adjusted only based on historical load. Using the CPU as an example, when CPU load of a task increases, a frequency of the CPU increases. For power consumption management and control, an execution time and power consumption that are of a background task are limited for different application types (for example, an instant messaging application), or hierarchical power consumption management and control is performed based on remaining power of an entire mobile phone. For example, 80% and 20% remaining power correspond to different power consumption management and control levels. For heat management and control, a heat source (such as an SOC and a display backlight) is limited depending on whether a temperature of each hot zone of a terminal device exceeds a threshold, to inhibit a temperature rise at the cost of reducing a frequency and a level of the heat source. It can be seen that the performance, the power consumption, and the heat are separately scheduled based on their respective deterioration degrees, and consequently, a seesaw effect occurs easily. For example, when power is sufficient, the performance is preferentially adjusted and controlled, and consequently, the power decreases rapidly and the mobile phone continuously heats up; or when power is insufficient, the power consumption and the heat are forcibly managed and controlled, and consequently, the performance deteriorates and user experience is affected.

SUMMARY

The following describes this application from a plurality of aspects. It is easy to understand that implementations and beneficial effects of the plurality of aspects may be mutually referenced.

According to a first aspect, this application provides a resource scheduling method. The method includes: determining a current application scene of a device, where the application scene is related to usage of a user or a running status of the device, and the running scene usually includes information about any one or more of a plurality of dimensions: time, space, a foreground application type, and an in-application usage scene; determining a resource management and control policy based on weights of performance, power consumption, and a temperature and current user experience of the performance, the power consumption, and the temperature, where the performance, the power consumption, and the temperature have their respective weights in the application scene; and scheduling a resource of the device according to the resource management and control policy.

The performance, the power consumption, and the temperature respectively represent user experience of the performance, the power consumption, and the temperature. The user experience is implemented by using a plurality of methods. For example, for the power consumption, a main indicator of user experience may be standby duration. In this case, longer estimated standby duration indicates better user experience of the power consumption. For the performance, an indicator of user experience may be a target frame rate, fluency, and the like of a video. Higher fluency indicates better user experience. For the temperature, an indicator of user experience may be a housing temperature of a mobile phone. A higher housing temperature of the mobile phone indicates worse user experience. The weights of the performance, the power consumption, and the temperature indicate degrees of impact of the performance, the power consumption, and the temperature on overall user experience. For example, the overall user experience may be a weighted sum of the user experience of the performance, the power consumption, and the temperature. In a process of determining the resource management and control policy, the user experience of the performance, the power consumption, and the temperature is combined to form the overall user experience, and the overall user experience is used as an objective to determine a resource scheduling policy.

It is difficult to achieve a balance among the performance, the power consumption, and the temperature. For example, the performance is improved, the power consumption increases, and the temperature also rises. Therefore, it is difficult to find a most appropriate resource scheduling policy. However, it is considered in the method provided in this application that importance of the performance, the power consumption, and the temperature to the user varies with different application scenes. In a specific application scene, the weights of the performance, the power consumption, and the temperature are combined to determine an appropriate resource management and control policy, and then a resource is scheduled according to the resource management and control policy, thereby implementing a combined decision-making process in which the performance, the power consumption, and the temperature are comprehensively considered, and effectively avoiding a seesaw effect caused by independent scheduling of the performance, the power consumption, and the temperature. In addition, according to the method provided in this application, a weighted sum of user experience satisfaction degrees of the three dimensions: the performance, the power consumption, and the temperature, is used as the overall user experience, and improvement of the overall user experience is always used as a scheduling objective, thereby effectively avoids a problem that the overall user experience is reduced because user experience of only one or two dimensions is improved while experience of another dimension is reduced excessively.

In some implementations, the resource management and control policy is determined periodically, and an interval may be obtained through machine learning, or may be set by a user of the device, or may be preset in the device before delivery.

In some implementations, the resource management and control policy may be triggered by an event. Specifically, when any one or more of a performance deterioration degree, a power consumption deterioration degree, and a temperature deterioration degree meet a preset condition, determination of the resource management and control policy is triggered. The deterioration degree is used to indicate a difference between a target indicator and an actual indicator. Determination (or updating) of the resource management and control policy is triggered by an event, so that a problem of the device can be found in a timely manner, and a new resource management and control policy can be provided as soon as possible.

In some implementations, the performance deterioration degree is used to indicate a difference between a performance parameter value of the device and a target performance indicator, where the target performance indicator is a value or values of one or more performance parameters that meet performance experience in the application scene; the power consumption deterioration degree is used to indicate a difference between predicted available power and lowest available power; and the temperature deterioration degree is used to indicate a difference between a predicted housing temperature and a temperature threshold.

In some implementations, the target performance indicator is determined by searching a preset database for a target performance indicator that matches the application scene, where the database stores correspondences between a plurality of application scenes and a plurality of target performance indicators. The database may be stored locally or on another device. For example, if the device is a mobile phone, the database may be stored on the mobile phone, or may be stored on a cloud server. In some other implementations, the target performance indicator may alternatively be obtained through online estimation, or the target performance indicator may be calculated by using a cloud server, and then the cloud server returns a result.

Different application scenes correspond to different target performance indicators. These correspondences are pre-stored in the database, and may be queried when necessary, thereby quickly determining the target performance indicator corresponding to the current application scene, and further speeding up determination of the performance deterioration degree.

In some implementations, a current performance parameter value of the device is obtained by collecting the performance parameter value of the device. In some other implementations, a performance parameter value at a next moment is obtained through prediction. Specifically, the performance parameter value of the device may be obtained through prediction based on the application scene and a current system status of the device. The system status indicates current resource usage of the device, for example, resource supply information and system load information. Both the foregoing two manners may be performed, and afterwards, one of the two obtained performance parameter values is selected, an average value of the two obtained performance parameter values is calculated, weighted processing is performed on the two obtained performance parameter values, or the like. Finally, a performance parameter value is obtained and compared with a target performance parameter, to obtain the performance deterioration degree.

In some implementations, the power consumption deterioration degree is determined according to a power usage rule of the device and remaining power of the device. The power usage rule reflects a historical charge status and a historical power consumption status (in other words, the power usage rule represents a historical power increase and historical power consumption of the device). The power usage rule includes a charge cycle, a power consumption rule, and an application usage rule. The charge cycle represents a historical charge interval, for example, from a current charging start moment to a next charging start moment, or from a current charging end moment to a next charging end moment, or from a current charging end moment to a next charging start moment, or from a current charging start moment to a next charging end moment. The power usage rule indicates a plurality of historical moments and historical remaining power at each moment. The application usage rule reflects historical power consumption information of an application, and may include a plurality of pieces of information, for example, common applications, average usage duration of a single application, average power consumption of a single application, and/or information that reflects usage duration and power consumption of an application when the application is used, such as a location of the terminal device.

In other words, this application provides a method. The method is used to learn a power usage rule of the user that includes a charge rule, a power consumption rule of the application, and the like, and then to determine a possible power consumption deterioration degree according to the power usage rule of the user, instead of presetting only some fixed standby duration thresholds. This method makes determination of the power consumption deterioration degree consistent with a power usage habit of the user, so that power allocation is more accurate and effective.

In some implementations, the housing temperature is determined based on a current housing temperature of the device and predicted values of temperature rises of a plurality of components in the device. Because each component has a different contribution to a housing temperature rise of the device, a weight of a temperature of each component usually further needs to be considered when the housing temperature is calculated. The weight is used to indicate the contribution to the housing temperature rise.

It should be noted that the "component" herein may also be understood as a "hot zone". One hot zone may include one or more components, and temperature measurement may take a single component as a minimum unit, or may take a hot zone as a minimum unit. A hot zone preset inside the device is usually used.

In some implementations, the temperature threshold used in calculation of the temperature deterioration degree is determined based on a temperature of an environment in which the device is currently located. An ambient temperature affects a touch temperature of the user, and therefore, the temperature threshold is determined by using the ambient temperature. This can better fit actual temperature experience of the user of the device, so that the temperature deterioration degree is calculated more accurately.

In some implementations, the resource management and control policy includes any one or more of the following three policies: a computing resource scheduling policy, an application management and control policy, and a peripheral device management and control policy. The resource management and control policy is comprehensive.

In some implementations, machine learning or a dynamic planning method is used in the process of determining the resource management and control policy. A mathematical method, for example, machine learning, is fully used to speed up the process of determining the resource management and control policy.

In some implementations, the application scene of the device usually includes a time dimension, a space dimension, and an application type dimension, for example, a scene of watching a video application at home at 14:00. However, the application scenes may alternatively be finer-grained. The application scene may further include the in-application usage scene. The in-application usage scene includes one or two of the following two pieces of information: an operation action of the user on the application and an in-application process action. For example, the user sends Moments or watches videos on WeChat (WeChat®), and plays a group battle in a game. Although a single-person scene and a group battle scene belong to the game scene, the single-person scene and the group battle scene may have different requirements for respective dimensions. Division into fine-grained application scenes can make determination of a user experience objective more accurate, so that the determined resource management and control policy is more targeted and more effective.

In some implementations, in the process of determining the resource management and control policy, candidate resource management and control policies are first determined based on a performance bottleneck or a dominant hot zone of the device, and then a to-be-executed resource management and control policy is determined from the candidate resource management and control policies. The candidate resource management and control policies are capable of improving the performance bottleneck or reducing a temperature of the dominant hot zone. In this manner, a search range of the resource management and control policy can be reduced, a calculation amount can be reduced, and method efficiency can be improved.

In some implementations, factors in determining the weights of the performance, the power consumption, and the temperature include any one or more of the following: the application scene of the device, deterioration degrees of the performance, the power consumption, and the temperature, and an effective time domain in which deteriorations in the performance, the power consumption, and the temperature are determined. For example, the effective time domain may be a millisecond level, an hour level, or a minute level.

In some implementations, some complex calculations used in the method, for example, a process of determining the resource scheduling policy, may be implemented by using a special-purpose processor. The special-purpose processor may be used as a coprocessor, and is executed under scheduling of a main processor. The special-purpose processor includes but is not limited to a neural-network processor, a machine learning processor, and the like. In addition, any step in the method may be performed by using the special-purpose processor, a microprocessor, or a coprocessor even if the step is not complex.

According to a second aspect, this application provides a resource scheduling method. The method includes: determining a current application scene of a device; converging user experience of performance, power consumption, and a temperature based on the application scene, to obtain overall user experience; and determining and executing a resource management and control policy based on the overall user experience.

In some implementations, the overall user experience is obtained based on user experience of the performance, the power consumption, and the temperature and weights of the performance, the power consumption, and the temperature in the application scene. For example, a weighted sum of the user experience of the performance, the power consumption, and the temperature is used as the overall user experience. The weight is used to indicate a degree of impact of each factor on the overall user experience, and may vary with different scenes. For example, a user pays more attention to the performance in a game scene, and therefore, a weight of the performance is higher than that of the power consumption and that of the temperature.

In some implementations, an experience value of the performance, an experience value of the power consumption, and an experience value of the temperature are determined based on a performance deterioration degree, a power consumption deterioration degree, and a temperature deterioration degree, respectively. The experience value is used to indicate a user experience satisfaction degree, the deterioration degree is used to indicate a difference between a target indicator and an actual indicator, and a higher deterioration degree indicates a smaller experience value. The overall user experience is determined based on the three experience values of the performance, the power consumption, and the temperature and the weights of the performance, the power consumption, and the temperature in the application scene.

For another implementation and a specific implementation of the second aspect, refer to the first aspect. Details are not described herein again.

According to a third aspect, this application provides a resource scheduling method. The method includes: determining a current application scene of a device based on a user instruction; converging user experience of performance, power consumption, and a temperature based on the application scene, to obtain overall user experience; and determining and executing a resource management and control policy based on the overall user experience.

In other words, the method provided in this application may be disabled by default in the device, and is enabled by the user by using an instruction.

In some implementations, application scene identification of the device may be enabled by default, but a subsequent combined scheduling method may be enabled by using the user instruction. Further, an enable instruction may be separately set for a performance model, a power consumption model, and a temperature model, and the user may enable any one or two of the three models as required.

For another implementation and a specific implementation of the third aspect, refer to the first aspect or the second aspect. Details are not described herein again.

According to a fourth aspect, this application provides a computer device, for example, a terminal device. The device includes a processor and a memory. The memory is configured to store a program. The processor is configured to read and execute the program, and implement the method described in any one of the foregoing aspects or implementations.

According to a fifth aspect, this application provides a resource scheduling apparatus (or referred to as a resource management and control apparatus). The apparatus includes one or more modules, and the one or more modules are configured to implement the method described in any one of the foregoing aspects or implementations.

According to a sixth aspect, this application provides a computer program (or a computer program product). The computer program (or the computer program product) stores a program, and after the program is read and executed by one or more processors, the method described in any one of the foregoing aspects or implementations is implemented.

According to a seventh aspect, this application provides a computer storage medium. The computer storage medium may be non-volatile, the computer storage medium includes a program, and after the program is read and executed by one or more processors, the method described in any one of the foregoing aspects or implementations is implemented.

## BRIEF DESCRIPTION OF DRAWINGS

To describe the technical solutions provided in this application more clearly, the following briefly describes the accompanying drawings. Apparently, the accompanying drawings in the following description show only some embodiments of this application.

FIG. 1 is a schematic diagram of hierarchical division of a mobile phone according to this application;
FIG. 2a is a schematic diagram of a logical structure of a resource management and control apparatus according to this application;
FIG. 2b is a schematic flowchart of a resource scheduling method according to this application;
FIG. 3 is a schematic diagram of another logical structure of a resource management and control apparatus according to this application;
FIG. 4 is a schematic diagram of an execution process of a performance model according to this application;

FIG. 5 is an example of a power usage rule of a user according to this application;
FIG. 6 is a schematic diagram of an execution process of a temperature model according to this application;
FIG. 7A and 7B are schematic flowcharts of an ambient temperature computing method according to this application;
FIG. 8 is an overall schematic flowchart of a resource scheduling method according to this application;
FIG. 9 is an example of dimensions of an application scene according to this application;
FIG. 10 is a schematic flowchart of policy selection and feedback adjustment according to this application;
FIG. 11 is a schematic diagram of a logical structure of a computer device according to this application; and
FIG. 12 is a schematic diagram of a logical structure of an NPU according to this application.

**DESCRIPTION OF EMBODIMENTS**

Existing performance management and control mechanisms such as an energy-aware scheduling (energy-aware scheduling, EAS) mechanism and a frequency adjustment-based governor mechanism that are of a CPU are based on load only, resulting in increased power consumption and severe overheating due to performance oversupply. Using video playing as an example, a quantity of frames in video playing is not fixed to 60 frames, but may be 24 frames, 25 frames, or 30 frames. Different quantities of frames are not considered in a current performance management and control mechanism when foreground computing resources are supplied, resulting in excessively high power consumption due to resource over-provisioning. In addition, scheduling policies of components such as the CPU, a GPU, and a DDR work independently and affect each other, and consequently, a seesaw effect occurs easily. For example, when power is sufficient, performance is preferentially adjusted and controlled, and consequently, the power decreases rapidly and a mobile phone continuously heats up; or when power is insufficient, power consumption and heat are forcibly managed and controlled, and consequently, performance deteriorates and user experience is affected. A heat control policy is straightforward, and a frequency limiting policy is directly used when it is found that a temperature rises. When calculation amounts are the same, prolonged computing is caused after a frequency is limited. As a result, CPU power consumption further increases, heat increases, and a heat control effect is canceled. For example, in a game scene, a DDR frequency adjustment policy makes a frequency of the DDR lower, resulting in increased CPU load and an increased frequency of the CPU. However, a memory is a performance bottleneck in this case, and a problem of an excessively low frame rate caused by the bottleneck is not resolved, but an overheating problem is caused by the increased frequency of the CPU.

It is proposed in a technology that the power consumption and the heat are managed and controlled jointly, to establish a model for a correspondence between the power consumption and a temperature rise and to predict the temperature rise based on the power consumption. A power consumption budget is developed periodically by predicting the temperature rise, to meet a condition that a temperature of a mobile phone is less than a temperature threshold. The power consumption budget is applied to a heat source, to reduce the power consumption and control the temperature rise. Essentially, the technology is used to control the heat by controlling the power consumption, and only considers coordination between the heat and the power consumption. However, it is difficult for this method to ensure that foreground usage experience of a user is not affected, and there is still a problem of deteriorating foreground performance for a purpose of controlling the power consumption or the. Further, based on joint management and control of the power consumption and the heat, it is proposed in a technology that a user is allowed to set a performance threshold as a management and control baseline of power consumption and heat. Even so, to consider user experience, the technology only allows the user to manually set an unacceptable performance baseline in a specific scene, but overall usage experience of the mobile phone, such as standby duration and a housing temperature, is not considered. Consequently, the overall usage experience of the mobile phone deteriorates easily.

None of management and control policies for the performance, the power consumption, and the temperature proposed in the foregoing technologies are specifically set based on a difference between usage modes of users. Different users use their mobile phones in different modes. For example, some users may perform charging at any time, and therefore, the standby duration is not an experience bottleneck, while some users are on business trips for a long time and may perform charging only once a day, and therefore, pay great importance to the standby duration instead of game performance. For another example, in low latitudes, an ambient temperature is high and a user is very sensitive to overheating of a mobile phone, while in high latitudes, an ambient temperature is low and a user has high tolerance to overheating.

Therefore, this application provides a combined resource scheduling method based on performance, power consumption, and a temperature (that is, overheating or heat). A starting point of this application is a usage scene of a user (equivalent to an application scene of a terminal device), instead of independent load (or deterioration degrees) of the performance, the power consumption, and the temperature, thereby reflecting an experience focus difference in different usage scenes. For example, a performance experience requirement is high in a game scene, and an experience limitation on standby duration may be relaxed. During scheduling decision-making in this application, the performance, the power consumption, and the temperature are combined, and optimal comprehensive user experience is used as a scheduling objective, but a decision-making point is not generated from one or two objectives, thereby avoiding a conflict between management and control mechanisms.

Further, in the method provided in this application, differences between scenes and between users are considered, and scheduling is not performed in the same way for all the scenes and all the users. Specifically, in this application, an overall user experience model is established based on three aspects: the performance, the power consumption, and the temperature, and the model has different focuses for different usage scenes. In addition, load of the performance, the power consumption, and the temperature has respective measurement models, and these measurement models are established based on individual characteristics of a user or a device. Based on the foregoing content, scheduling policies for different scenes and different users are finally generated.

The following describes the combined resource scheduling (or management or control) method provided in this application by using a smartphone as an example. It should be understood that the method provided in this application not only may be applied to the smartphone, but also may be applied to another type of terminal device. The terminal device herein includes but is not limited to the smartphone, an in-vehicle apparatus, a personal computer, an artificial intelligence device, a tablet computer, a personal digital assistant, an intelligent wearable device (such as a smartwatch, a smart band, or smart glasses), an intelligent voice device (for example, a smart speaker), a network access device (for example, a gateway), and the like. In addition, the method provided in this application may further be applied to another type of computer device such as a server.

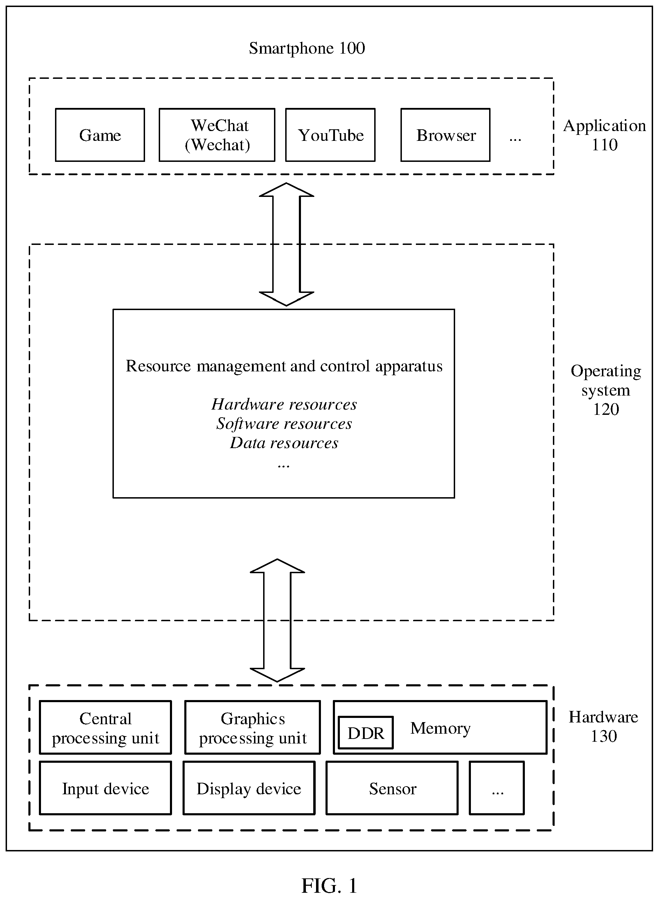

FIG. 1 is a schematic diagram of a logical structure of a smartphone 100 according to an embodiment. The smartphone 100 includes three layers: an application 110, an operating system 120, and hardware 130. The application 110 includes a game, WeChat, YouTube, a browser, and other various applications. The hardware 130 includes a central processing unit (central processing unit, CPU), an application processor (application processor, AP), a graphics processing unit (graphic processing unit, GPU), a memory (for example, a DDR), an input device, a display device (for example, a touchscreen is a device integrating an input function and a display function), various types of sensors, and the like. Some hardware is not shown in the figure. For more hardware, refer to descriptions in subsequent embodiments.

The operating system 120 (operating system, OS for short) is a computer program for managing and controlling computer hardware and software resources, and is a system software directly operating on a "bare smartphone". Various application software included in the application 110 usually can run only with support of the operating system. The operating system 120 is not only an interface between a user and a computer, but also an interface between the hardware 130 and the application 110. The operating system 120 includes the following functions: managing various hardware in the hardware 130, various software in the application 110, and various data resources, controlling running of a program, improving a human-machine interface, providing support for the application, and fully making use of all resources of a computer system. It can be learned that the resource management and control mechanism is a core of the operating system 120 (a software program for implementing the mechanism is referred to as a resource management and control apparatus in this embodiment). The resource scheduling method provided in this embodiment is a method performed in the operating system 120. By using this method, an upper-layer application scene is sensed, an operating status of a bottom-layer resource is monitored, and a resource scheduling policy is determined by converging three factors: performance, power consumption, and a temperature, to improve overall experience of the smartphone 100.

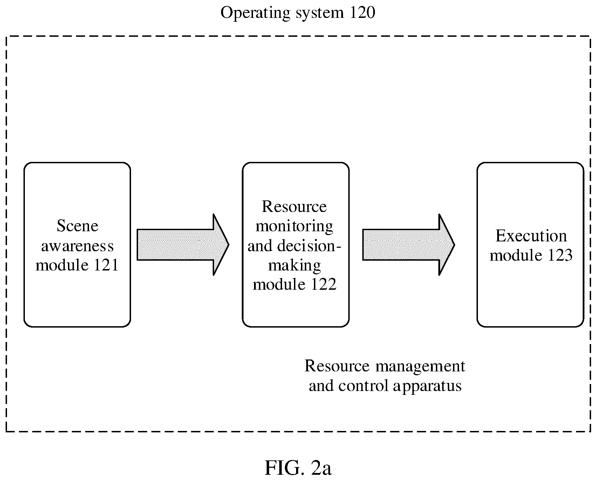

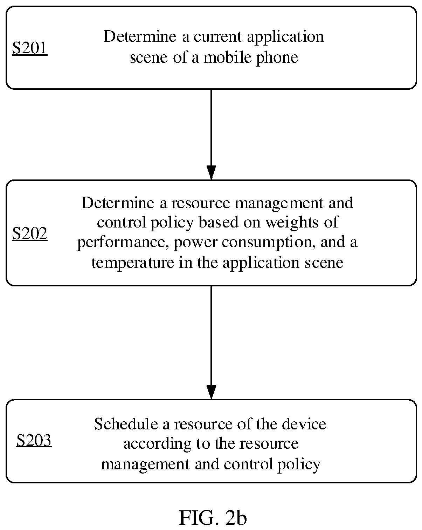

FIG. 2a and FIG. 2b are a schematic diagram of module division of the resource management and control apparatus and an outlined schematic flowchart of a resource scheduling method according to this embodiment, respectively. As shown in FIG. 2a, the resource scheduling method provided in this embodiment is performed inside the operating system 120, and the operating system 120 includes three modules: a scene-awareness module 121, a resource monitoring and decision-making module 122, and an execution module 123. These three modules respectively perform three steps S201 to S203 shown in FIG. 2b.

S201. Determine a current application scene of a mobile phone.

The application scene usually includes information about the following one or more dimensions: time, space, a foreground application type, and an in-application usage scene. For example, a scene of "watching videos at home" includes two dimensions: the space and the foreground application type.

The application scene of the mobile phone may be understood as a usage scene in which a user uses the mobile phone, for example, a meeting scene, a sleep scene, a work scene, a home scene, a noise scene, a driving scene, or a running scene.

The application scene of the mobile phone may be single-dimensional or multi-dimensional. For example, the user watches videos in a noise environment. Further, if the user is using an application, different scenes may be obtained, through subdivision, in the application, for example, a scene of watching a 1080p or 720p video, or a scene of playing a group battle in a game.

It should be noted that an action or a motion status of the mobile phone may be classified as the "space" dimension. For example, a foreground application type of the running scene may be a health application or a music application, and a sensing apparatus on the mobile phone detects that the mobile phone is in regular movement. In other words, the "running scene" includes information about the two dimensions: the foreground application type and the space.

S202. Determine a resource management and control policy based on weights of performance, power consumption, and a temperature in the application scene.

A trigger condition for determining the resource management and control policy may be that any one or more of a performance deterioration degree, a power consumption deterioration degree, and a temperature deterioration degree meet a preset condition.

The performance deterioration degree is used to indicate a difference between a performance parameter value of the device and a target performance indicator, and the target performance indicator is a value or values of one or more performance parameters that meet performance experience in the application scene. The power consumption deterioration degree is used to indicate a difference between predicted available power and minimum available power. The temperature deterioration degree is used to indicate a difference between a predicted housing temperature and a temperature threshold.

It should be noted that in this embodiment, a "difference" between two items is a distinction between the two items. There are a plurality of implementations for the "difference". For example, the difference may be a difference value between the two items, a ratio of the two items, or a value obtained by adding another factor to a difference value or a ratio between the two items; or the difference is not a specific value, but is a function that represents a trend. For example, development of the performance parameter value contradicts the target performance indicator. For example, the performance is going to deteriorate, but the target performance indicator is a higher value. In other words, a specific implementation is not limited in this embodiment provided that the deterioration degrees can be represented.

The performance, the power consumption, and the temperature herein may be understood as performance experience, standby duration (namely, power consumption experience), and a housing temperature (namely, temperature experience), respectively. The resource management and control policy is determined based on the weights of the performance experience, the power consumption experience, and the temperature experience. The weights are related to the application scene of the mobile phone that is determined in the previous step. The weights of the performance experience, the power consumption experience, and the temperature experience are usually different in different application scenes. For example, a weight of performance experience in the game scene is greater than that of the temperature experience and that of the power consumption experience.

Specifically, the target performance indicator is first determined based on the application scene determined in the previous step. Then, a difference between the target performance indicator and a performance parameter value that is currently configured for the mobile phone is calculated to determine the performance deterioration degree, and whether to generate a performance deterioration alarm is determined based on the performance deterioration degree. The power consumption deterioration degree is determined based on the application scene, a power usage habit, and current remaining power that is of the terminal device, and whether to generate a power consumption deterioration alarm is determined based on the power consumption deterioration degree. A housing temperature of the terminal device is predicted based on a hot zone temperature obtained through collection, the temperature deterioration degree is determined based on the housing temperature, and whether to generate a temperature rise alarm is determined based on the temperature deterioration degree. When any one or more of the performance deterioration alarm, the power consumption deterioration alarm, and the temperature rise alarm are generated, it indicates that the current resource management and control policy cannot meet overall user experience of the mobile phone, and therefore, the resource management and control policy starts to be determined.

In other embodiments, the user may set a resource management and control cycle to periodically trigger a policy determining process.

S203. Schedule a resource of the device according to the resource management and control policy, where the resource management and control policy includes any one or more of the following three policies: a computing resource scheduling policy, an application management and control policy, and a peripheral device management and control policy.

In some embodiments, the resource management and control policy determined in the previous step is a resource management and control policy that meets optimal user experience in the application scene. User experience is obtained by performing mathematical transformation on satisfaction degrees of the performance, the standby duration, and the temperature and on the weights of the performance, the standby duration, and the temperature in the application scene.

A process of determining the resource management and control policy may be understood as a mathematical process of solving the optimal user experience, for example, machine learning or a dynamic planning method. In some other embodiments, "optimal" may be not necessarily understood as a theoretical or mathematical maximum value. The value may be set by the user, or the value is not the mathematical maximum value, but may be a most appropriate value in the current scene.

It can be learned from the foregoing that, according to the method provided in this embodiment, the mobile phone can detect the usage scene of the user, a target resource requirement (equivalent to the target performance indicator) is determined based on the usage scene, a difference between a performance requirement and a current resource configuration is calculated to obtain performance deterioration data, and a scheduling decision is generated and delivered based on the weights of the performance, the power consumption, and heat in the current usage scene in combination with deterioration data generated for the power consumption and the heat, to ensure that the foreground performance, the standby duration, and the housing temperature of the mobile phone are stable at the same time.

Compared with the prior art, the method provided in this application converges the performance, the power consumption, and the heat based on their weights in the current scene on a premise of identifying the usage scene of the user, and uses optimal comprehensive user experience obtained by combining the performance, the power consumption, and the heat, as a scheduling objective, instead of generating a decision-making point from one or two objectives, thereby avoiding a conflict between management and control mechanisms, reflecting focuses of the performance, the power consumption, and the heat in different usage scenes, and generating a more effective resource adjustment and control policy.

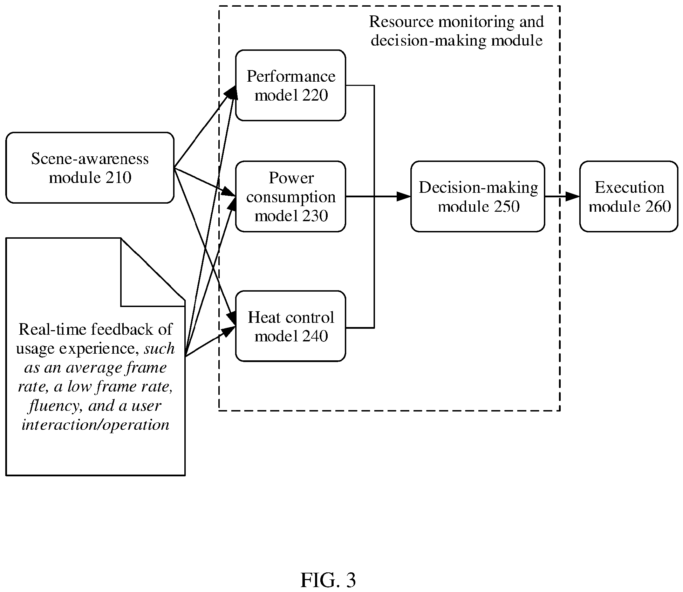

FIG. 3 is a schematic diagram of further module division of the resource management and control apparatus according to this embodiment. In particular, more detailed descriptions are provided for a resource monitoring and decision-making module. As shown in the figure, the apparatus includes a scene awareness module 210 (equivalent to the scene-awareness module 121), an execution module 260 (equivalent to the execution module 123), and four modules 220 to 250.

The scene awareness module 210 is configured to identify an application scene of a terminal. The application scene is identified by information about one or more dimensions, for example, a usage scene (home/office, daytime/night, or a working day/rest day) of a user, an application type (such as a video application or a game application), and a fine-grained in-application usage scene (for example, a scene of watching a 1080p high-definition video).

The performance model 220 is configured to predict whether performance deteriorates or a performance deterioration degree. Specifically, the performance model 220 is configured to: detect target performance objectives in different application scenes, and predict and determine, with reference to a current system status (including a resource supply status and a system load status), whether user experience of a performance dimension deteriorates and a deterioration degree. Further, the performance model 220 analyzes and identifies, based on PMU (performance monitor unit) information reported by a chip, a main bottleneck that causes a performance deterioration.

It should be noted that the performance model usually performs prediction at a millisecond level.

The power consumption model 230 is configured to predict a power consumption deterioration degree. In some embodiments, whether a standby duration constraint is met within a period of time (for example, one hour) in the future is predicted based on a current application, remaining power of a mobile phone, and a power usage habit obtained through learning, and if the constraint is not met, the power consumption deterioration degree is provided. The power consumption deterioration degree may be represented by using standby duration or a power deterioration degree.

It should be noted that the power consumption model usually performs prediction at an hour level.

The heat control model 240 is configured to predict a temperature deterioration degree. In some embodiments, whether a phenomenon of severe overheating occurs within a period of time (for example, 8 minutes) in the future because a temperature of the mobile phone exceeds a threshold is determined based on a heat steady-state algorithm and a housing temperature prediction algorithm. If the phenomenon occurs, an indication is sent. Further, the heat control model identifies, based on a temperature of a hot zone on the mobile phone and a degree of impact of the hot zone on the final housing temperature, a dominant hot zone that causes overheating.

It should be noted that the heat control model usually performs the prediction at a minute level.

The decision-making module 250 is configured to determine a resource management and control policy based on weights of performance, power consumption, and a temperature in a current application scene. In some embodiments, combined scheduling decision-making is triggered based on alarm information from the performance model, the power consumption model, and the heat control model, and a final solution with optimal comprehensive user experience is dynamically determined by comprehensively considering requirements and situations of the foregoing three dimensions, and weights of the three dimensions in the current application scene.

The execution module 260 is configured to implement resource management and control according to the determined resource management and control policy. The resource management and control usually includes a plurality of management and control measures for a plurality of resources. Therefore, a scheduling management and control module may be understood as a combination of a plurality of functional units distributed among different places of a system. The resource management and control includes scheduling a real-time resource, a background process, and a peripheral device, and the like.

The following separately describes in detail a plurality of implementations of this application from perspectives of scene awareness, a performance model, a power consumption model, a heat control model, and combined scheduling. The following methods may be understood as specific implementations of the foregoing corresponding functional modules. It is easy to understand that one functional module may include a plurality of sub-modules, and the plurality of sub-modules may cooperate with each other to complete a specific implementation of the functional module.

(1) Scene awareness (corresponding to the scene awareness module 210)

The scene awareness is to combine a plurality of identification methods, and to output a specific usage scene of a user. For example, currently, the user is watching a 1080p hardware-decoded video at home. The scene awareness includes three aspects: spatial-temporal awareness of the user, application type awareness, and in-application scene identification.

The spatial-temporal awareness of the user may further include a time dimension and a space dimension. For example, the time dimension is a holiday/work day or daytime/ night. Time is identified by obtaining a current system time or querying a system calendar. For example, the space dimension is a business trip/tourist trip or home/office. GPS location information obtained through collection is clustered, a home location and an office location are identified based on geographical locations that appear most frequently at different times, a business trip, a tourist trip, or the like is determined based on a current time.

The application type awareness is to detect a foreground application used by the user. A list of a plurality of application types, for example, application types ranking top 10,000 by a quantity of users in China, may be preset in a mobile phone system. Then, the list is queried based on the current foreground application, to determine an application type corresponding to the foreground application. For example, WeChat (WeChat) corresponds to an instant messaging application. In some other implementations, the mobile phone may alternatively send an identifier of the current application to a cloud server by using a network, and the cloud server identifies the identifier and returns an identification result to the mobile phone.

The in-application scene identification is to identify a finer-grained scene in an application. An in-application scene dimension includes an operation of a user on the application (referred to as a user action) and an action of a process in the application (referred to as a process action). For example, the user action includes playing videos of different resolutions and having a video chat, while the action of a process in the application includes starting a game, bring out the big guns, and choosing heroes. The user action may be obtained in a manner such as by reporting various events through dotting and identifying metadata in a data flow. The process action may be identified in a manner, for example, by proactively reporting data to the system by using drawing information of the application or an SDK pre-embedded in the application.

(2) Performance model (corresponding to the performance model 220)

The performance model is mainly used to identify performance objectives in different scenes, and predict and determine, with reference to a current system status (including a resource supply status and a system load status), whether user experience of a performance dimension deteriorates (at a millisecond level) and a deterioration degree. Further, the performance model analyzes and identifies, based on a current usage scene and the system status, a main bottleneck that causes a performance deterioration.

FIG. 3 is a schematic flowchart of a method for identifying a scene and determining a performance deterioration alarm. The method roughly includes the following three parts: (a), (b), and (c).

(a) Identify a scene and a corresponding target performance indicator

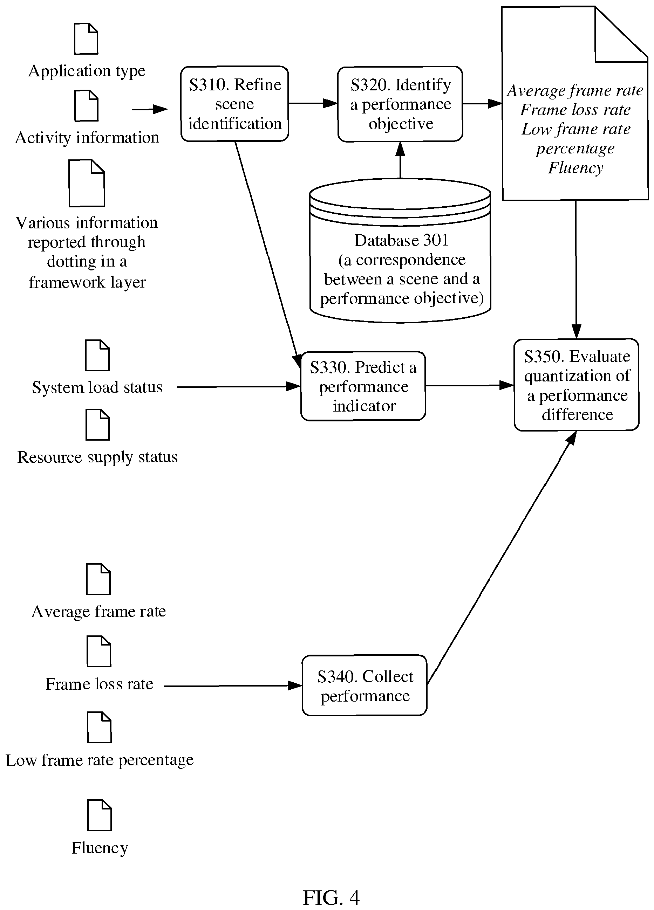

A process of identifying the scene in various manners is already described in the foregoing (1), and is not described herein again. For details, refer to FIG. 4. After identifying the scene (S310), a preset database 301 is searched for a target performance indicator that matches the scene (S320). The database 301 stores correspondences between a plurality of application scenes and a plurality of target performance indicators. The database may be generated offline and pre-configured.

Specifically, the database includes different scenes (denoted as $S_i$, i = 0 ... n) and target performance indicators $T_i$ corresponding to the different scenes. $T_i$ includes a target frame rate, a frame loss rate, a low frame rate percentage (a percentage of a quantity of frames whose frame rates are lower than the target frame rate to a total quantity of frames), fluency (frame rate fluctuation), and the like.

In some embodiments, scene division and an experience objective in the database may be manually made. In some other embodiments, scene classification and a target performance indicator in the database are found by clustering reported big data. For example, a video playback scene is subdivided into scenes of different frame rates (24/25/30 frames per second) and software and hardware decoding scenes, and these scenes respectively correspond to different experience objectives.

When the system runs, the scene awareness module 210 may be configured to identify a scene $S_i$, and then the performance model 220 queries the database 301 to obtain a target performance indicator $T_i$ of the scene $S_i$. For example, the scene awareness module 210 determines, by using a decoding mode of video stream data and frame header information, that the scene is a scene supporting hardware decoding at 30 frames per second. In this scene, the performance model 220 is input, and a corresponding experience objective determined by the performance model 220 may be $T_i$ = (an average target frame rate is 30 frames per second, the frame loss rate is less than 30%, the low frame rate percentage is not greater than 20%, and the fluency is within 0.8).

(b) Determine a performance indicator in a current system status

A frame rate change in a next sampling cycle (in milliseconds or seconds) based on the current application scene and the current system status, and performance indicators in other dimensions are calculated (S330). The system status includes a resource supply status and a system load status. The performance indicators in other dimensions, such as the frame loss rate, the low frame rate percentage, and the fluency, may be calculated based on a current frame rate change and a corresponding calculation formula. The calculation formula is as follows:

$$\mathcal{F}^{i+1} = \mathcal{F}^i + \Delta\mathcal{F} \quad (1)$$

where $\mathcal{F}^{i+1}$ represents a frame rate in the next sampling cycle, $\mathcal{F}^i$ represents a frame rate obtained through collection in a current sampling cycle, and $\Delta\mathcal{F}$ is a predicted frame rate change. A specific calculation method of the predicted frame rate change is as follows:

$$\Delta\mathcal{F} = \beta_{overload} \times \sum_{r \in R} \frac{r_{cur} - r_{within\_scene}}{|r_{cur}|} \times \alpha_{app} \quad (2)$$

where r represents a dimension of a resource, R represents a set of all resources, $r_{cur}$ represents a current resource supply status, $r_{within\_scene}$ represents a resource requirement status in the in-application scene, $\frac{r_{cur} - r_{within\_scene}}{|r_{cur}|}$ represents a normalization operation to avoid a situation in which a dimension is lost due to an excessively large difference between value ranges of dimensions, $\alpha_{app}$ represents weight coefficients of different applications on different resources, and $\beta_{overload}$ represents a weight coefficient corresponding to system load.

$\alpha_{app}$ and $\beta_{overload}$ may be obtained in the following manners: In a first manner, after offline analysis is performed, the two parameters are preset in the mobile phone; and in a second manner, online analysis is performed, for example, statistics on usage of each resource when the application runs is collected, focuses/requirements of the application on different resources are analyzed, and weights of all dimensions are learned based on the focuses/requirements.

In addition to the foregoing prediction manner, the performance indicator in the current system status may be obtained by collecting data. Referring to FIG. 3, a frame rate within a period of time is obtained through collection, and the average frame rate, the frame loss rate, the low frame rate percentage, the fluency, and the performance indicators in other dimensions are obtained through collection or calculation (S340).

It should be noted that either of the predicted data and the collected data may be used, or data obtained in the two manners may be processed for use, for example, an average value of the two pieces of data is used.

(c) Evaluate a user performance experience difference

A difference between current performance and target performance, that is, a performance deterioration degree, is calculated based on the target performance indicator and a current performance indicator that is fed back actually (S350). Herein, the performance indicator that is fed back actually may be obtained in the prediction manner mentioned above, or may be obtained in a real-time collection manner.

A formula for calculating the performance deterioration degree is as follows:

$$\Delta T = \sum \alpha_i * \frac{T_{target\,i} - T_{out\,i}}{T_{target\,i}} \quad (3)$$

where $\alpha_i$ is a deterioration weight of the $i^{th}$ indicator in different scenes. $\sum \alpha_i = 1$. For example, a weight corresponding to an average frame rate deterioration in a game scene is greater than a weight corresponding to an average frame rate deterioration in a video scene. $T_{target\,i}$ represents a target value of the $i^{th}$ indicator. For example, a target performance indicator of an average frame rate in a battle scene is 57 frames per second. $T_{out\,i}$ represents an actual value of the $i^{th}$ indicator.

When ΔT exceeds a threshold (for example, exceeds a specific percentage), it is considered that the performance deteriorates, and a performance deterioration alarm event needs to be reported to the decision-making module 250.

It should be noted that different performance indicators have different requirements. Larger values obtained after quantizing some performance indicators indicate better performance, while smaller values obtained after quantizing some performance indicators indicate better performance. Therefore, a formula $\frac{T_{target\,i}-T_{out\,i}}{T_{target\,i}}$ may change based on a specific situation. This is a common mathematical method, and specific formula variations are not listed one by one in this embodiment. For specific examples, refer to subsequent descriptions.

It should be noted that, among the foregoing steps, the scene identification is performed by the scene-awareness module 210, while all other steps may be performed by the performance model 220.

(3) Power consumption model (corresponding to the power consumption model 230)

The power consumption model is used to learn a power usage habit of the user, and evaluate a degree of impact on the standby duration or available power based on the current application scene and the current application. For a determined user, the standby duration and the available power may be interchangeable. Therefore, only the available power is used as an example for description in the following. A specific implementation of the power consumption model mainly includes the following three parts: (a), (b), and (c).

(a) Collect and record power usage information of the user

This step is performed before the usage habit of the user is learned. The collected and recorded information includes but is not limited to an application used by the user, usage duration, a charging start moment and a charging end moment, a charging location, average power consumption of the application, and other information, and is stored persistently in a file or database form.

(b) Analyze and learn a power usage rule of the user

The power usage information that is persistently stored in step (a) is used as input in this step, and the power usage rule of the user is learned through machine learning or by using a statistical method. The power usage rule includes a charge cycle, a power consumption rule, and an application usage rule.

Specifically, the charge cycle is learned by using the charging start moment and the charging end moment as input. Charge cycles are different for different users. For example, some users perform daily charging, while some users perform charging once every two days. Statistics on remaining power of the user at each time point are collected, and historical remaining power based on a time point is learned, and is used as the power consumption rule. Applications commonly used by the user in different locations and different time segments, average usage duration and average power consumption of the applications, and other information are learned by using the application used by the user, the usage duration, the average power consumption of the application, the user location, and the like as input, and are used as the application usage rule.

(c) Divide power consumption based on a usage habit

Using the charge cycle and the power consumption rule learned in step (b) as input, each time segment and minimum available power corresponding to the time segment are output by dividing a time segment and by using a statistical method.

The time segment is divided based on the charge cycle instead of a fixed day. Charge cycles are different for different users. For example, some users perform daily charging, that is, duration of the charge cycle is 24 hours, while some users perform charging once every two days, that is, duration of the charge cycle is 48 hours.

In some implementations, a fixed time slice may be used for a method for dividing the time segment, for example, every three hours are used as one time segment. In some other implementations, the time segment may be divided based on semantics, for example, early morning, morning, noon, afternoon, evening, night, and midnight. In some other implementations, a method for dynamically dividing the time segment may be used.

An example of the method for dynamically dividing the time segment is as follows: Equidistant division is first performed on the charge cycle by a preset quantity of time segments. Duration of each time segment is determined. If the duration exceeds a threshold, for example, 3 hours, a time segment is added to the time segment, to ensure that the duration of each time segment does not exceed the duration threshold. A power change or a standby duration change in each time segment is evaluated. If the power change or the standby duration change in the time segment exceeds the threshold, for example, minimum available power in a current time segment is 80%, minimum available power in a next time segment is 20%, and a power change is 60%, and exceeds a threshold 20%, interpolation is performed in the time segment, to ensure that the power change in each time segment does not exceed the power threshold.

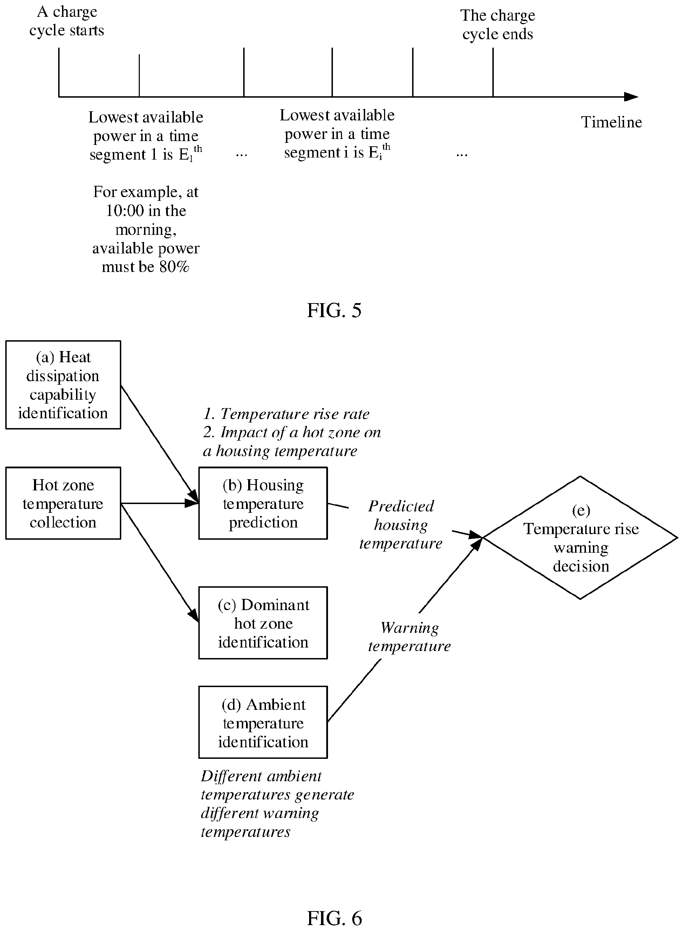

FIG. 5 is a schematic diagram of time segments obtained through division. A method for calculating minimum available power in each time segment is as follows:

$$E_i^{th} = \frac{1}{N}\sum_N E_{ji}^{history} + \gamma(\text{std, loction, scene}) \qquad (4)$$

where $E_i^{th}$ represents minimum available power in the $i^{th}$ time segment, N represents a quantity of statistics collection times in the history, $E_{ji}^{history}$ represents remaining power in the time segment for the $j^{th}$ time in the history, and $\gamma(\cdot)$ represents an elastic function, that is, the minimum available power is allowed to fluctuate within a value range represented by $\gamma$(std, location, scene) in which a standard deviation (std) of historical statistics, a current location (location), and a current application scene (scene) are used as variables.

(d) Evaluate a real-time power consumption deterioration in the current application scene.

This step is performed after step (c) is completed. This step is performed periodically or is triggered and performed when the application used by the user changes. Input of this step is current power, the application usage rule learned in step (b), and the time segment division information calculated in step (c), and output is power consumption deterioration evaluation and a power consumption deterioration degree.

Specifically, usage duration of a foreground application and estimated power consumption $\Delta E$ in a next time segment are predicted according to the application usage rule and the current foreground application, and then whether a power consumption deterioration occurs is evaluated based on minimum available power $E_i^{th}$ that needs to be met in the next time segment. If a value obtained by subtracting the estimated power consumption $\Delta E$ from current remaining power $E_{cur}$ is less than the minimum available power $E_i^{th}$ that needs to be met in the next time segment, the power consumption deterioration occurs, and an alarm is sent to a combined scheduling module for decision-making. Evaluation of a deterioration degree $\xi$ can be calculated according to the following formula:

$$\xi = \frac{E_i^{th} - (E_{cur} - \Delta E)}{E_i^{th}} \qquad (5)$$

(4) Heat control model (corresponding to the heat control model 240)

Based on a heat steady-state algorithm and a housing temperature prediction algorithm, whether a temperature rise warning (indicating that a housing temperature of a mobile phone exceeds a threshold) is generated in few minutes in the future is determined. In addition, the heat control model identifies, based on a temperature of a hot zone and impact of the hot zone on a final temperature, a dominant hot zone that heats up. Referring to FIG. 6, an implementation of the heat control model mainly includes the following parts: (a) to (e).

(a) Heat dissipation capability identification

A layout of the mobile phone, including a structure layout of the mobile phone and a housing material of the mobile phone, affects a heat dissipation capability of the mobile phone. Heat dissipation capability curves of the mobile phone in a plurality of usage scenes are learned offline by using a function approximation method, for example, a least square method, and are pre-configured before delivery.

(b) Housing temperature prediction

A housing temperature is the housing temperature of the mobile phone. The housing temperature is determined based on a current housing temperature of the mobile phone, predicted values of temperature rises of a plurality of components in the mobile phone, and weights of temperatures of the components. A predicted value of a temperature rise of a component is determined based on a temperature rise function of the component and a current resource configuration of the component, and the temperature rise function may be preset in the mobile phone.

Specifically, a housing temperature of the mobile phone at a moment t in a short period in the future is predicted (at a minute level) based on a current hot zone temperature that is obtained through collection and a degree of impact of the hot zone on the housing temperature. A specific calculation formula is as follows:

$$H(t) = T_{now} + \sum \alpha_i * F_i(R_i, t) \qquad (6)$$

where $\alpha_i$ represents a weight of each hot zone temperature, and is related to a layout of a hardware device; $T_{now}$ represents a temperature value sampled for the hot zone at a current moment, an increased temperature of each hot zone at a moment T in the future may be measured by using $F_i(R_i, t)$, where $R_i$ is a current system resource configuration (or supply) status, and t is duration; and $F_i$ is a temperature rise function of the $i^{th}$ hot zone component (for example, a CPU, a GPU, or a DDR), is related to a hardware configuration and a layout that are of a product, is usually a result obtained after linear fitting is performed on a plurality of factors, and is a fixed function.

DDR is short for dual data rate, and DDR SDRAM is short for double rate synchronous dynamic random access memory, and is usually referred to as DDR in this field. SDRAM is short for synchronous dynamic random access memory.

It should be noted that one "hot zone" may include only one component, or may include a plurality of components of a same type or different types.

(c) Dominant hot zone identification

A percentage of a contribution of each hot zone to a housing temperature rise is calculated and all hot zones are ranked. Top N hot zones are selected as dominant hot zones. The contribution percentage is calculated as follows:

$$\rho_j = \frac{\alpha_j * F_j(R_j, t)}{\sum \alpha_i * F_i(R_i, t)} \qquad (7)$$

where $\rho_j$ represents a percentage of a contribution of a hot zone j to the housing temperature, $\alpha_j * F_j(R_j, t)$ represents a housing temperature rise generated in the hot zone j, and $\sum \alpha_i * F_i(R_i, t)$ represents housing temperature rises generated in all the hot zones.

The identified dominant hot zones may be provided as input for scheduling decision-making by the decision-making module 250.

(d) Ambient temperature identification

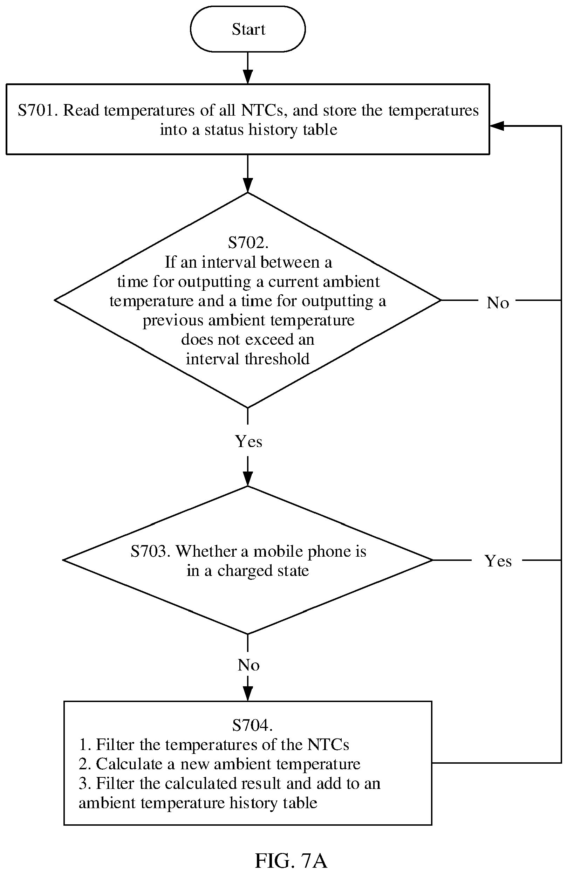

Input for calculating the ambient temperature includes temperature data obtained through collection by an NTC node, power consumption data of each component, and ambient temperature data of a thermal chamber; and simulation training is performed on the input. A fitting parameter of an ambient temperature model is calculated. A flowchart is shown in FIG. 7A. A current system status and the data that is obtained through collection by all NTC nodes are first stored into a status history table (S701), and then whether the ambient temperature needs to be updated is determined (S702 and S703). If an interval between a time for outputting a current ambient temperature and a time for outputting a previous ambient temperature does not exceed an interval threshold (S702), the ambient temperature is not updated; otherwise, whether the mobile phone is in a charged state is determined (S703); and if the mobile phone is in a charged state, the ambient temperature is not updated. If an interval between a time for outputting a current ambient temperature and a time for outputting a previous ambient temperature exceeds an interval threshold and the mobile phone is not in a charged state, the temperature data in the status history table is filtered (1), a latest ambient temperature is calculated based on filtered data (2), some filtering processing may need to be performed on a calculation result (3), and a final result obtained after the filtering processing is added to an ambient temperature history table (S704).

The full name of NTC is thermistor temperature sensor. The NTC node is a temperature collection sensor, and is configured to collect temperatures of all hot zones.

The ambient temperature is calculated periodically. When an interval between a time for current calculation and a time for last calculation exceeds a threshold and the mobile phone is not in the charged state, a latest ambient temperature is calculated, and a calculation result is added to the ambient temperature history table.

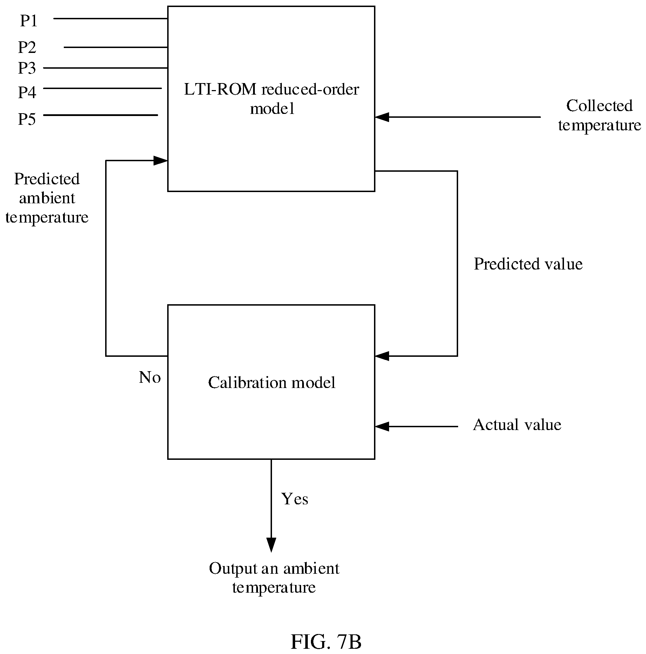

As shown in FIG. 7B, a Kalman-like filtering calculation method is used for calculating the ambient temperature. Specifically, a linear and time-invariant reduced-order model (linear and time-invariant reduced-order model, LTI-ROM) may be used to predict the ambient temperature. Input of the model is a plurality of power consumption values P1 to P5 and a collected temperature value. Output from the LTI-ROM model is a predicted value of an ambient temperature at a next moment. The predicted value is input into a calibration model, and is calibrated by the calibration model based on an actual value of the ambient temperature. When the predicted value is the same as the actual value, the ambient temperature is output. If the predicted value is different from the actual value, a parameter of the LTI-ROM model is reversely adjusted.

(e) Temperature rise alarm decision-making

In the heat control model, a temperature rise alarm may have the following two determination conditions: a maximum temperature within a short period does not exceed a threshold, and a temperature fluctuation range within this period does not exceed the threshold.

This is described by the following formula:

$$\forall t \in [0, T) \; H(T) \triangleq \begin{cases} Max\big(H(T)\big) < T_{thresold} \\ Max\big(H(T)\big) - Min\big(H(T)\big) < \varepsilon \end{cases} \quad (8)$$

where H(T) describes a temperature of the mobile phone in a time segment T, $T_{thresold}$ represents an upper temperature threshold, and $\varepsilon$ represents a temperature fluctuation threshold. A meaning of the foregoing formula is that a highest temperature in the time segment T is less than $T_{thresold}$, and a difference between the highest temperature and a lowest temperature is less than $\varepsilon$. In other embodiments, "less than" may also be "less than or equal to".

The temperature threshold $T_{thresold}$ and/or $\varepsilon$ may be adjusted based on the ambient temperature. For example, if the ambient temperature is low, $T_{thresold}$ may be set to a higher value, because users have a higher tolerance on the housing temperature of the mobile phone in this case. Conversely, if the ambient temperature is high, $T_{thresold}$ may be set to a smaller value, because users have a lower tolerance on the housing temperature of the mobile phone in this case.

In other embodiments, the foregoing two conditions are not indispensable, and either of the two conditions may be selected as a determination condition of the temperature rise alarm.

(5) Combined scheduling model

When one or more of the following events: the performance deterioration alarm, the power consumption deterioration alarm, and the temperature rise alarm occur, combined scheduling decision-making is triggered, and a final scheme with optimal overall user experience is determined based on the combined scheduling model, to manage and schedule a real-time resource, a background application, and a peripheral device.

On the premise that a current status X = {a usage scene of a mobile phone, a performance deterioration degree, a power consumption deterioration degree (equivalent to a standby duration deterioration degree), and a temperature deterioration degree}, available management and control policy space A is searched for an optimal policy a, so that overall user experience in the short period is optimal. The policy a may include {a CPU/GPU/DDR frequency, a peripheral device management and control level, and an application management and control policy}. The overall user experience R is a weighted value of the following factors:

$$R = \sum \alpha_i \times S_i \quad (9)$$

S includes the following dimensions: a performance experience objective satisfaction degree ($S_1$), standby duration ($S_2$), and housing temperature experience ($S_3$). In other words, the overall experience R is related to the three factors: the performance, the power consumption, and the housing temperature.

$\alpha_i$ represents a weight of each factor, and the weight varies with different terminal application scenes (or with different users). For example, a weight of a performance experience objective satisfaction degree in a game scene is higher than that in an e-book reading scene. A searching objective is to find the policy a with a maximum R, that is, $max_{a \in A}R$.

In a specific implementation, a process of selecting the combined scheduling decision may be abstracted as a reinforcement learning process or a Markov decision process. The reinforcement learning is used as an example.

- In an offline state, an experience objective weight $\alpha$ in each scene is determined based on surveys and user experience.
- The process of selecting the combined scheduling decision is abstracted as a four-tuple E = <X, A, P, R>. Environment X represents the current status, that is, {a usage scene, a performance/power consumption/heat deterioration degree}. A represents a current available policy, for example, a policy combination including resource supply adjustment, a peripheral device management and control policy, and an application management and control policy. P represents a state transition probability matrix obtained through learning in the offline environment. R is a reward for determining the policy A in the X status, that is, an improvement/deterioration change in the overall user experience.

- Based on P and R learned in the offline scene, the policy A is used based on the status X during running.

In addition, the combined scheduling decision is used to learn and update subsequent policy selection based on feedback from a system and a user during running. The feedback includes the following content:

- Performance dimension: a frame loss, frame freezing, a proactive adjustment feedback (backlight and volume adjustment) from a peripheral device, a subsequently used application, and the like;
- Power consumption dimension: a quantity of battery depletion times, whether power consumption exceeds a threshold within a period of time, and the like;
- Temperature dimension: a quantity of battery overheating times, whether a battery temperature decreases effectively, and the like.

The following describes, with reference to an example of a game scene and the foregoing method, a combined scheduling method provided in this application.

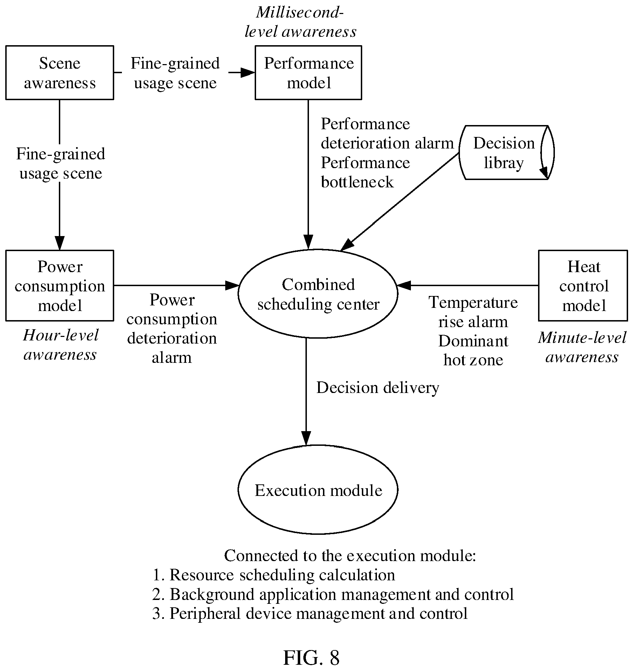

As shown in FIG. 8, the method mainly includes four awareness modules: a scene awareness module, a performance model, a power consumption model, and a heat control model, and a combined scheduling center (including a decision library, a decision-making module, an execution module that is connected to an external scheduling mechanism). The following describes processes in detail. The scene awareness module is responsible for identifying a fine-grained usage scene. The performance model is a millisecond-level awareness module, and is responsible for determining a target performance requirement based on a usage scene, determining a current performance indicator, and then determining a performance deterioration degree and a performance bottleneck based on the target performance requirement and the current performance indicator. The power consumption model is an hour-level awareness module, and is responsible for determining a power consumption (standby duration) deterioration degree and outputting warnings in a timely manner. The heat control model is a minute-level awareness module, and is configured to determine a temperature rise and a dominant hot zone. The combined scheduling center receives input of these three awareness modules: the performance model, the power consumption model, and the heat control model, determines a scheduling policy with optimal overall performance, and delivers the scheduling policy to the execution module. The scheduling policy may include computing resource scheduling, background application management and control, peripheral device management and control, and the like. The decision library is used to store some preset scheduling policies, so that the combined scheduling center searches the preset scheduling policies for the scheduling policy with the optimal overall performance.

An execution process of the scheduling policy is not a focus of this application. Therefore, the following separately describes procedures of the remaining five modules other than the execution module.

Procedure 1: Awareness of a usage scene of a user

The usage scene of the user (that is, an application scene of the mobile phone) is detected, and is used as basic input of the performance model to identify a performance requirement of a user foreground application.

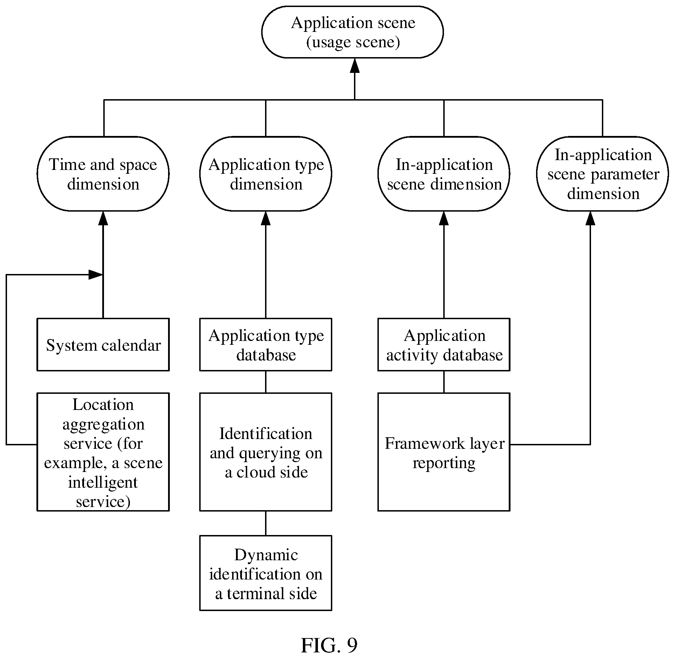

As shown in FIG. 9, the usage scene of the user includes several dimensions that are respectively provided by the following data sources.

- Time and space dimensions of the user, including a current time and a type of a location where the user is located. The time dimension may be obtained by querying a system calendar, such as a holiday and a working day. The space dimension includes a home, an office, and the like, and may be obtained by using a location aggregation service. For example, a scene intelligent service is provided on some mobile phones. In this case, the space dimension may be obtained by querying a scene intelligent service interface.
- Application type dimension, for example, an instant messaging application, an email application, or a game application. An application type usually represents a core purpose of an application. For example, WeChat (WeChat) is an instant messaging application. Data may be obtained by querying an application type database (where the database is set on a terminal side or a cloud side), or may be dynamically identified on a terminal side, or may be queried from a cloud.
- In-application scene dimension. For example, videos can be watched in WeChat Moments. In this case, an in-application scene is a video playback scene. A scene can be identified based on an application action event reported through dotting in a framework (Framework) and foreground application association information. For example, the video playback scene may be identified based on a full-screen event and a video playback event (or a video type application and a sound production event) that are reported through dotting. For a non-game event, an application activity may be associated with a scene, and foreground activities may be used to identify different in-application scenes. For example: ActivityManagerService reports that an activity com.tencent.mm/com.tencent.mm.plugin.sns.ui.SnsTimeLineUI is performed on the foreground. In this case, it is known that the user is using a WeChat Moments function.

- In-application scene parameter dimension. For example, videos played on Youku can be classified into full-screen videos, non-full-screen videos, software-decoded videos, hardware-decoded videos, videos with different resolutions such as 360p, 720p, and 1080p, and videos with or without subtitles. The data may be obtained through dotting in the framework or related parameters are proactively sent by an application that integrates a specific SDK.

A usage scene awareness result of the user is encapsulated into a fine-grained usage scene represented by a scene data type and transferred to the performance model and the power consumption model as input of the two models.

Using a game as an example, it is assumed that the user is currently playing a G game, and there are different scenes with frame rates of 30 frames per second, 40 frames per second, and 60 frames per second in the game. In this case, scene information output by the user scene awareness is: <holiday, evening, home, G game, group battle, 60 frames per second>. "G" represents a name of a game application, and "group battle" represents a multi-player battle scene in the game.

Procedure 2: performance model

The performance model is configured to detect a deterioration degree of performance experience, send performance deterioration awareness information and a performance bottleneck, and notify the combined scheduling center. For a game scene, a performance experience indicator usually includes the following dimensions: an average frame rate, a low frame rate percentage, and a jitter rate. In other scenes, a performance experience indicator may be the same as or different from that in the game scene. This is not limited in this embodiment.

In the performance model, steps 1 to 4 are performed in the following sequence and the performance deterioration degree and the performance bottleneck are output.

1. Identify a scene experience objective

The database is queried based on Scene= <holiday, evening, home, G game, group battle, 60 frames per second> to obtain performance experience indicators corresponding to the current scene.

Specifically, the performance indicators may be identified based on a level of the mobile phone. For example, a flagship mobile phone, a mid-end mobile phone, and a low-end mobile phone correspond to performance objectives A, B, and C, respectively. The three mobile phone levels may be implemented as three tables in the database, and each table includes a correspondence between a scene and a performance indicator that are of a mobile phone level. Alternatively, the three mobile phone levels may be implemented as one table, and identified by using mobile phone level fields.

Continuing with the foregoing example, it is learned from information reported at a framework layer that a running environment is a flagship mobile phone and a resolution is 1080p. In this case, the performance objective A corresponding to the current scene is <an average target frame rate is 57 frames per second, a low frame rate percentage is 0.5%, and a jitter rate is 0.2%>.

For a mid-end mobile phone, the corresponding performance objective B is <an average frame rate is 56 frames per second, a low frame rate percentage is 1%, a jitter rate is 3%>. For a low-end mobile phone, the corresponding performance objective C is < an average frame rate is 55 frames per second, a low frame rate percentage is 1%, a jitter rate is 1%>.

2. Collect foreground application performance data

A current actual performance indicator of the application may be collected through dotting in Surfaceflinger. In addition to the current actual performance indicator, the performance model may predict a performance indicator change in a short period of time based on current system load and an SOC resource supply status.

Surfaceflinger is a component at a framework layer of an Android system. SOC is short for system on a chip, may be considered as a chip set, and integrates cores of a processor that include four large cores and four small cores in this embodiment. The GPU and the DDR are also on the SOC in this embodiment.

A performance deterioration may be detected based on a difference between the actual performance indicator obtained through collection or prediction and the performance objective. The performance deterioration is quantized to generate different levels of performance deterioration alarms.

3. Discover a performance bottleneck

Discovery of the performance bottleneck is mainly identified based on an event reported by a performance monitor unit (performance monitor unit, PMU) on the SOC. This is a mature solution, and details are not described herein.

4. Quantize a scene deterioration

The performance deterioration is quantized by weighting three experience indicators. For a quantization, refer to the foregoing formula (3).

Continuing with the foregoing example, in a group battle scene of the G game, deterioration degree weights of the three indicators are as follows: An average frame rate is 0.5 frames per second, a low frame rate is 0.3, and a jitter rate is 0.2, corresponding to $\alpha_i$ in the formula (3). In other words, in the group battle scene of the G game, the average frame rate has a largest weight, the low frame rate has a second largest weight, and the jitter rate has a smallest weight.

Quantization of a deterioration degree of each dimension is defined as a percentage difference between a current performance indicator $T_{out\,i}$ and a performance objective $T_{target\,i}$. For example, an average frame rate objective in the performance objective A is 57 frames per second, and a current average frame rate is 50 frames per second. In this case, a deterioration value of an average frame rate is (57 - 50) / 57 = 0.12.

For example, a deterioration value of the low frame rate is (0.3 - 0.5) / 0.5 = -0.4, where a target value is 0.5, and a current value is 0.3. The current value is greater than the target value, and therefore, the deterioration value is a negative number. In this case, the deterioration value may be forcibly set to 0. Similarly, a deterioration value of the jitter rate is (0.3 - 0.2) / 0.2 = 0.5, where a target value is 0.2, a current value is 0.3, and the deterioration value is 0.5.

According to the formula (3), $\Delta T$ = 0.5 x 0.12 + 0.3 x 0 + 0.2 x 0.5 = 0.16. Different values of $\Delta T$ correspond to the different levels of performance deterioration alarms. The performance deterioration alarms are reported to the combined scheduling center. Specifically, 0.16 may be directly reported, or 0.16 may be converted into a level of a performance deterioration alarm, for example, a corresponding level is 0.3, and 0.3 is reported to the combined scheduling center.

Process 3: Power consumption model

In this embodiment, a current usage scene also needs to be considered for the power consumption model, because power consumption may be different in different usage scenes. For example, power consumption in the game scene in this implementation is faster than that in a chat scene.

An operation process of the power consumption model includes the following steps 1 and 2:

1. Learn a charging habit and a power consumption habit of the user and determine remaining standby duration.

The power consumption model collects power usage information in the background. The power usage information includes two parts: the charging habit and the power consumption habit.

(a) Charging habit

A difference in time between two consecutive times of charging from less than 80% to 100% is calculated in current time and space types (a working day/rest day, home/office/others, from a scene identification module), and is used as a charging record of the user.

Statistics learning is performed on charging records of past N times of charging in the same time and space type. For example, n = 7, that is, charging records of the latest seven times are used as a window, and a variance of charging start time segments in the window is calculated. For example, charging times of past seven times are respectively 9:00, 10:00, 9:00, 9:30, 8:30, 9:00, and 10:30. In this case, a corresponding variance is 0.41.

If the variance of the charging records is less than a specific threshold, it is considered that the user has a stable charging habit, and a predicated time of the user from current charging to next charging in a current time and space type may be obtained. If the variance of the charging records is relatively large, default charging duration (12 hours) is used as a predicted value to calculate an interval between current charging and next charging.

(b) Power consumption habit

One day is divided into k time slices. For example, k is 8, and each time slice is 3 hours. Applications commonly used by the user in a current time slice and power consumption of the applications per unit of time are collected, and power consumption overheads of the user in the time slice are obtained through weighting. The foregoing is used as the power consumption habit of the user.

It should be noted that the foregoing charging habit and power consumption habit are merely examples for description. According to this application, other information may further be obtained as input of the power consumption model as required.

2. Quantize a power consumption deterioration

The power consumption deterioration is evaluated periodically or when a foreground application is changed. A manner of evaluating the power consumption deterioration is to calculate a degree of impact of the current application on standby duration when the current time slice ends.

For example, at 15:00, the user starts to play the G game, and a charging habit of the user indicates that the user may start charging at 21:00, and current remaining power is 3000 mA. The power consumption model needs to reserve 20% power to avoid entering a power saving mode. Therefore, current allocable power is 2800 mA. In time slices 15:00 to 18:00 and 18:00 to 21:00, historical power consumption ratio of the user is 3:7. In this case, 840 mA and 1960 mA are respectively allocated to the two time slices. After the user ends the game at 15:50, the user finds that the game consumes 300 mA power. Based on the power consumption habit, it is estimated that 800 mA power needs to be consumed in a current time slice. In this case, a power consumption deterioration degree in the current time slice is 1960 - (2800 - 300 - 800)/1960 = 0.1326. The power consumption deterioration triggers a power consumption alarm, and a deterioration alarm is sent to the combined decision-making module.

Procedure 4: heat control model

Before delivery, two parts of information related only to a component model and a device layout are preset in the mobile phone:

a. a temperature rise function $F_i(R_i,t)$ of the component in the hot zone, indicating a temperature rise generated by the component after duration t when the level is $R_i$; and
b. a heat dissipation capability curve of the mobile phone.

During use of the mobile phone, an ambient temperature is estimated in a Kalman filtering manner when the mobile phone is not in a charged state. For a specific method, refer to the foregoing FIG. 7A and FIG. 7B.

During use of the mobile phone, a temperature of the hot zone is collected periodically, and a predicted value of a housing temperature is calculated based on the collected temperature of the hot zone and a hot zone temperature rise prediction function. Then, a temperature rise warning is generated based on the predicated value of the housing temperature and the ambient temperature.

For example, the current ambient temperature is 26°C. When the user is playing the G game, the CPU runs with a heavy load at a high frequency. It is found by collecting the temperature of the hot zone and predicting the temperature of the hot zone that, a current housing temperature is 38°C, and exceeds 42°C within five minutes, and the highest temperature (42°C) in a short period of time exceeds a threshold (assuming that the threshold is 40°C). In this case, the temperature rise warning is generated.

A quantified temperature deterioration result is reported to the combined scheduling center. Warning information similar to <there is a short-period temperature rise, a current temperature is 38°C, and a temperature exceeds 42°C within five minutes> is converted into a temperature deterioration value. The conversion may be performed according to a formula, or may be performed according to a rule. For example, the temperature is divided into several levels: 38, 42, 45, 48, and 53. Corresponding temperature deterioration values are 0.2, 0.3, 0.5, 0.8, and 1.2 after the temperature exceeds corresponding levels within 5 minutes, while corresponding temperature deterioration values are 0.1, 0.2, 0.3, 0.4, and 0.6 after the temperature exceeds the corresponding levels within 10 minutes. In this embodiment, the temperature deterioration value is output as 0.3.

A dominant hot zone is discovered in a housing temperature calculation process. A hot zone that contributes the most to the housing temperature rise is used as the dominant hot zone (for example, a GPU), and is sent to the combined scheduling center for decision-making.

Procedure 5: combined scheduling

When one or more of the following events: a performance deterioration alarm, a power consumption deterioration alarm, or a temperature rise alarm occur, combined scheduling decision-making is triggered, that is, a scheduling policy that maximizes user experience R is searched for. Refer to the foregoing formula (9). Specifically, $\alpha_i$ and $S_i$ are obtained based on weights $\alpha_i$ of the performance, the power consumption, and the heat in the current application scene.

A weight coefficient $\alpha$ of each user experience dimension varies with different application scenes and users, and may be determined by the following factors:

$$\alpha = \gamma(\text{scene}, \text{time\_domain}, \text{deterioration}) \quad (10)$$

$\gamma(.)$ is a weight calculation formula. Weight coefficients of the three dimensions are calculated based on a plurality of factors, and the plurality of factors include as follows:

(a) scene represents a terminal application scene, for example, a game scene, a video scene, or a reading scene. An importance of each dimension varies with different scenes. For example, in the game scene, the weight of the performance dimension is higher than that of the power consumption dimension and that of the heat dimension. In this embodiment, scene is <holiday, evening, home, G game, group battle, 60 frames per second>;
(b) time_domain represents an effective time domain of the experience dimension, for example, a second level, a minute level, or an hour level. A smaller effective time domain of the experience dimension indicates a larger relative weight;
(c) deterioration indicates a deterioration degree of the dimension. A greater deterioration degree indicates a greater weight of the dimension.

For example, under a condition of <game scene, at home>, when <performance deterioration, power consumption deterioration, temperature rise deterioration> is <0.3, 0.3095, 0.3>, the finally calculated <performance dimension weight, power consumption dimension weight, temperature rise weight> is <0.5, 0.3, 0.2>. A calculation formula $\gamma$ of $\alpha$ may be preset to-be-queried data, or may be data calculated in real time according to a formula.

• Quantization of performance, power consumption, and heat experience ($S_i$)

User experience in a performance dimension is measured based on foreground user experience and background user experience. The foreground user experience is determined by a target frame rate, a frame loss rate, a low frame rate percentage, and fluency. The background user experience is measured by a warm startup percentage used by the background application subsequently. User experience in the performance dimension is quantized by using satisfaction degrees of the three indicators: an average frame rate, a low frame rate percentage, and frame rate jitter. The calculation method is subtracting the performance deterioration degree from 1, 1 - $\Delta T$. To be specific, a smaller performance deterioration in the performance model indicates better user experience, and a maximum value is 1.
User experience in the power consumption dimension is measured based on standby duration. When the standby duration does not reach a specified upper limit, longer standby duration indicates better user experience in the power consumption dimension. After the standby duration reaches the upper limit, an increase in the standby duration does not affect user experience in the power consumption dimension. For example, the upper limit of the standby duration may be 1.2 times the charge cycle of the user. The user experience in the power consumption dimension is quantized into a ratio of predicted standby duration to the upper limit of the standby duration, and a maximum value is 1.
User experience in the temperature rise dimension is measured based on a maximum value and a variance of temperature rise speeds when a subsequent temperature does not exceed a threshold (that is, the user checks that the mobile phone is not overheated). A smaller maximum value and a smaller variance indicate optimal temperature rise experience (the temperature rise speed is controlled to increase at a lowest speed). User experience in the heat dimension is quantified by subtracting a temperature rise deterioration degree from 1, and a maximum value is 1. For details about quantization of the temperature rise deterioration, refer to "Procedure 4: heat control model".

• Search for an optimal scheduling policy

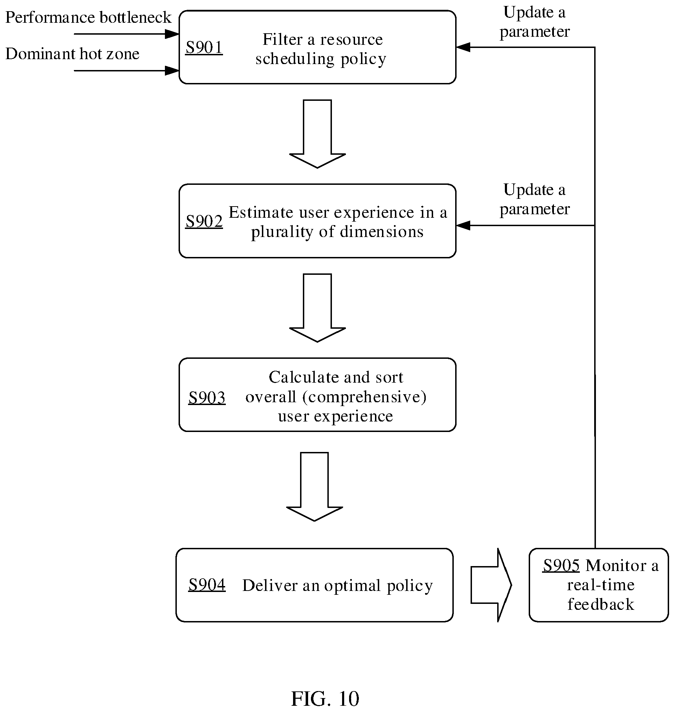

FIG. 10 is an example of a process of determining an optimal scheduling policy. As shown in the figure, a method for searching available management and control policy space for an optimal policy may include the following steps.
S901. Determine a direction for policy searching by using a performance bottleneck and a dominant hot zone, and pertinently select a candidate resource scheduling policy set.
The performance bottleneck and the dominant hot zone are provided by a performance model and a heat control model, respectively, helping reduce policy searching space and reduce a quantity of candidate resource scheduling policies. For example, in a G game scene, it is assumed that a performance bottleneck of a G game is a DDR. When performance deteriorates, DDR resources need to be increased to improve performance experience. Assuming that a dominant hot zone is a GPU, a frequency of the GPU may be pertinently reduced to quickly control a temperature rise. More specifically, when a conflict exists between a plurality of dimensions, for example, both a dominant hot zone and a performance bottleneck belong to big core resources, an increase and a decrease in a frequency of a big core resource are possible search directions, and the search directions are determined by subsequent overall user experience.
In addition to the performance bottleneck and the dominant hot zone, information about a resource power consumption table may also be used as input for filtering the resource scheduling policies. The resource power consumption table is provided by the power consumption model. The resource power consumption table includes a plurality of types of resources and corresponding power consumption information, for example, a level of a computing resource such as a CPU or a GPU, and an amount of power consumption per unit time; a level of a peripheral device such as a screen or sound, and an amount of power consumption per unit of time; an amount of average power consumption of different applications in the background per unit of time.

S902. For each candidate resource scheduling policy, estimate user experience in the performance, power consumption, and temperature dimensions with reference to user experience evaluation methods in the three dimensions. For details about the user experience evaluation methods in the dimensions, refer to the previous part "Quantization of performance, power consumption, and heat experience ($S_i$)".

S903. Calculate overall user experience of each resource scheduling policy based on a weight coefficient of each dimension in a current application scene, sort the overall user experience, and select a policy with a highest score as an optimal resource scheduling policy. The calculation formula is $R = \Sigma\alpha_i{}^*S_i$ (equivalent to the formula (9)). For details about how to measure the weight coefficient, refer to "Weights $\alpha_i$ of the performance, the power consumption, and the heat in the current application scene."

S904. Deliver and execute the optimal resource scheduling policy, obtain, through a real-time feedback (S905), a real change status of each experience dimension (including the performance, the power consumption, and the temperature) after the policy is used, and adjusting calculation parameters in the foregoing steps based on the real change status. For example, it is assumed that the performance does not deteriorate after the previously calculated optimal policy is implemented, but it is found, in real-time monitoring after the policy is implemented, that there is still a frame loss, resulting in a performance experience deterioration. In this case, a feedback mechanism is used to feed back information to a user experience evaluation calculation module in the performance dimension, to update the weights of the parameters. Further, the information is also fed back to a performance bottleneck analysis module of the performance model, and the performance bottleneck in this scene is re-learned.

It should be noted that, some data quantization or data processing manners are described in the foregoing embodiments, aiming at smoothly calculating a subsequent mathematical model. However, this application is not limited to these embodiments. In a specific implementation process, a person skilled in the art easily thinks of another mathematical processing method according to the method provided in this application. In addition, an error may occur in a specific calculation process.

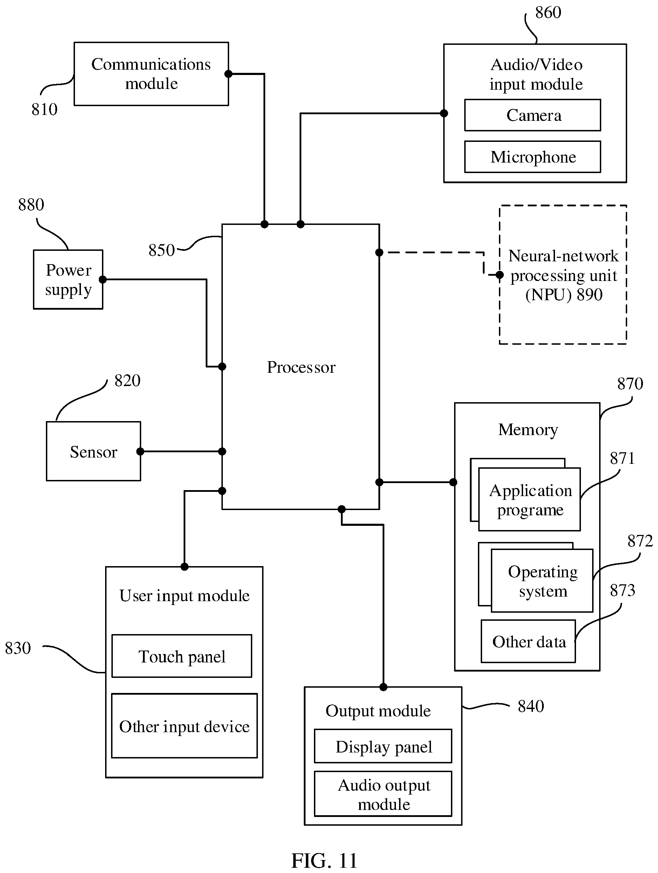

FIG. 11 is a schematic structural diagram of a smartphone. FIG. 1 is a schematic layered diagram of a system architecture of a smartphone, while FIG. 11 describes a structure of the mobile phone from a perspective of hardware as much as possible. For hardware included in the hardware 130 in FIG. 1 and a connection relationship of the hardware, refer to FIG. 11. The operating system 120 and the application 110 in FIG. 1 are stored inside a memory 870 shown in FIG. 11 in a software program form.

As shown in FIG. 11, the mobile phone includes a communications module 810, a sensor 820, a user input module 830, an output module 840, a processor 850, an audio/video input module 860, a memory 870, and a power supply 880. Further, the mobile phone provided in this embodiment may further include a neural-network processing unit (neural-network processing unit, NPU) 890.

The communications module 810 may include at least one module that can enable a computer system to communicate with a communications system or another computer system. For example, the communications module 810 may include one or more of a wired network interface, a broadcast receiving module, a mobile communications module, a wireless Internet module, a local-area communications module, and a location (or positioning) information module. The plurality of modules each have a plurality of implementations in the prior art, and details are not described one by one in this application.

The sensor 820 can sense a current state of the system, for example, an on/off state, a location, whether the system is in contact with a user, a direction, and acceleration/deceleration. In addition, the sensor 820 can generate a sensing signal used to control an operation of the system.

The user input module 830 is configured to: receive input digital information, character information, or a contact touch operation/ contactless gesture, and receive signal input related to user settings and function control of the system, and the like. The user input module 830 includes a touch panel and/or another input device.

The output module 840 includes a display panel, configured to display information entered by the user, information provided for the user, various menu interfaces of the system, and the like. Optionally, the display panel may be configured in a form of a liquid crystal display (liquid crystal display, LCD), an organic light-emitting diode (organic light-emitting diode, OLED), or the like. In some other embodiments, the touch panel may cover the display panel, to form a touch display screen. In addition, the output module 840 may further include an audio output module, an alarm, a tactile module, and the like.

The audio/video input module 860 is configured to input an audio signal or a video signal. The audio/video input module 860 may include a camera and a microphone.

The power supply 880 may receive external power and internal power under control of the processor 850, and provide power required by operations of various components of the system.

Although the processor 850 is depicted in the figure as a component, 850 may represent a plurality of processors. For example, the processor 850 may include a central processing unit (central processing unit, CPU) and a graphics processing unit (graphic processing unit, GPU). The CPU usually has a plurality of cores, and belongs to a multi-core processor. The plurality of cores may be integrated into one chip, or each of the plurality of processors may be an independent chip.

The memory 870 stores a computer program, and the computer program includes an operating system program 872, an application program 871, and the like.

Typical operating systems include a Microsoft's Windows® system, an Apple's iOS® system, and a Google's Linux®-based Android (Android®) system. The method provided in any one of the foregoing embodiments of this application may be implemented by software, may be considered as a specific implementation of the operating system program 872, and is deployed on a smartphone as a part of the operating system program 872. After the processor 850 reads and runs the operating system program 872, in the method provided in this application, a function of the operating system program 872 may run in a timely time. Specifically, a function provided in this application may be enabled by default, or may be enabled upon a user instruction.

It should be noted that the operating system program 872 is equivalent to the operating system 120 in FIG. 1, and the application program 871 is equivalent to the application 110 in FIG. 1.

The memory 870 may be one or more of the following types: a flash (flash) memory, a hard disk type memory, a micro multimedia card type memory, a card type memory (for example, an SD or XD memory), a random access memory (random access memory, RAM) (for example, the DDR SDRAM mentioned in the foregoing embodiments), and a read-only memory (read only memory, ROM), an electrically erasable programmable read-only memory (electrically erasable programmable read-only memory, EEPROM), a programmable read-only memory (programmable ROM, PROM), a replay protected memory block (replay protected memory block, RPMB), a magnetic memory, a magnetic disk, or an optical disc.

In some other embodiments, the memory 870 may be a network storage device on the Internet. The system may perform an operation such as updating or reading on the memory 870 on the Internet.

The processor 850 may indicate one or more processors. For example, the processor 850 may include one or more central processing units, one central processing unit and one graphics processing unit, or one application processor and a coprocessor (for example, a micro control unit or a neural network processor). When the processor 850 includes a plurality of processors, the plurality of processors may be integrated into a same chip, or each of the plurality of processors may be an independent chip. One processor may include one or more physical cores.

The memory 870 further stores other data 873 in addition to the computer program.

The NPU 890 is mounted to the main processor 850 as a coprocessor, and is configured to execute a task assigned by the main processor 850 to the NPU 890. In this embodiment of this application, the NPU 890 may implement, under scheduling of the main processor 850, some complex algorithms involved in a management and control decision-making process. In some other embodiments, the NPU 890 may also be used as a main processor to perform all procedures of the method provided in this application, or invoke a coprocessor of the NPU 890 to jointly implement the method provided in this application.

It should be noted that a connection relationship among the modules shown in the figure is merely an example. The method provided in any embodiment of this application may also be applied to a smartphone using in another connection manner. For example, all or some of the modules are connected by using a bus to implement communication.

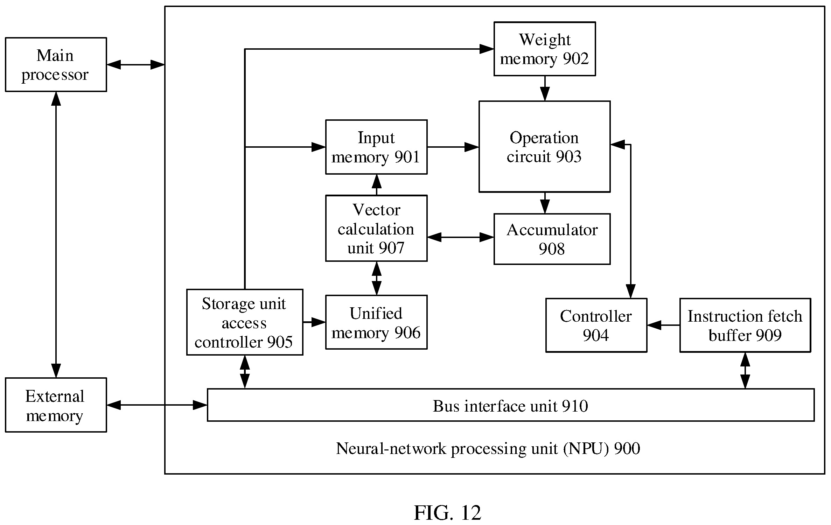

FIG. 12 is a schematic structural diagram of an NPU 900. The NPU 900 is equivalent to the NPU 890 in FIG. 11. As shown in the figure, the NPU 900 is connected to a main processor and an external memory. The main processor herein is equivalent to the processor 850 in FIG. 11. A core part of the NPU 900 is an operation circuit 903, and a controller 904 controls the operation circuit 903 to extract data in a memory and perform a mathematical operation.

In some implementations, the operation circuit 903 includes a plurality of processing engines (process engine, PE) inside. In some implementations, the operation circuit 903 is a two-dimensional systolic array. The operation circuit 903 may alternatively be a one-dimensional systolic array or another electronic circuit that can perform mathematical operations such as multiplication and addition. In some other implementations, the operation circuit 903 is a general-purpose matrix processor.

For example, it is assumed that there are an input matrix A, a weight matrix B, and an output matrix C. The operation circuit 903 fetches data corresponding to the matrix B from a weight memory 902 and buffers the data on each PE of the operation circuit 903. The operation circuit 903 fetches data of the matrix A from an input memory 901, to perform a matrix operation on the matrix B, and store an obtained partial result or an obtained final result of the matrix into an accumulator (accumulator) 908.

A unified memory 906 is configured to store input data and output data. Weight data is directly migrated to the weight memory 902 by using a storage unit access controller 905 (for example, a direct memory access controller, DMAC). The input data is also migrated to the unified memory 906 by using the storage unit access controller 905.

A bus interface unit 910 (bus interface unit, BIU) is configured to interact with the storage unit access controller 905 and an instruction fetch buffer 909 (instruction fetch buffer) by using an AXI (advanced extensible interface) bus.

The bus interface unit 910 is used by the instruction fetch buffer 909 to obtain an instruction from the external memory, and is further used by the storage unit access controller 905 to obtain original data of the input matrix A or the weight matrix B from the external memory.

The storage unit access controller 905 is mainly configured to migrate input data in the external memory to the unified memory 906, migrate the weight data to the weight memory 902, or migrate the input data to the input memory 901.

A vector calculation unit 907 usually includes a plurality of operation processing units. If required, further processing is performed on output of the operation circuit 903, such as vector multiplication, vector addition, an exponential operation, a logarithmic operation, and/or value comparison.

In some implementations, the vector calculation unit 907 can store a processed vector into the unified memory 906. For example, the vector calculation unit 907 may apply a non-linear function to the output of the operation circuit 903, for example, to a vector of an accumulated value, so as to generate an activation value. In some implementations, the vector calculation unit 907 generates a normalized value, a combined value, or both. In some implementations, the processed vector can be used as activation input of the operation circuit 903.

The instruction fetch buffer 909 connected to the controller 904 is configured to store an instruction used by the controller 904.

The unified memory 906, the input memory 901, the weight memory 902, and the instruction fetch buffer 909 are all on-chip memories. The external memory in the figure is independent of the NPU hardware architecture.

There are a plurality of models and a plurality of algorithms in the method provided in this embodiment. A complex algorithm, for example, an algorithm for searching for an optimal scheduling policy, may be executed by the NPU 900, and then an execution result is returned to the main processor, thereby improving execution efficiency of the method.

It should be noted that the NPU is merely an example. Some algorithms in the solutions provided in this application may be processed by another type of special-purpose processor. Because processing efficiency of the dedicated processor in processing a specific algorithm is higher than that of the common processor, the special-purpose processor is used to process some algorithms in the solutions, thereby effectively improving overall execution efficiency of the solution, finding an appropriate resource management and control policy as soon as possible, and implementing the resource management and control policy.

It should be noted that the method provided in this embodiment may also be applied to a non-terminal computer device, for example, a cloud server.

It should be noted that, a face recognition solution is used as an example for description in most of the foregoing embodiments. However, the method provided in this application may definitely be applied to another solution other than face recognition. A person skilled in the art easily think of a similar implementation of another solution based on an implementation provided in this application.

It should be noted that division into modules or units provided in the foregoing embodiments is merely an example, functions of the described modules are merely used as examples for description, and this application is not limited thereto. A person of ordinary skill in the art can converge functions of two or more modules thereof as required, or divide a function of one module to obtain more modules at a finer granularity and other variants.

For same or similar parts in the foregoing embodiments, mutual reference may be made to each other. "A plurality of' in this application means two or more or "at least two" unless otherwise specified. "A/B" in this application includes three cases: "A", "B", and "A and B".

The described apparatus embodiment is merely an example. The modules described as separate parts may or may not be physically separate, and parts displayed as modules may or may not be physical modules, may be located in one position, or may be distributed on a plurality of network modules. Some or all of the modules may be selected according to actual needs to achieve purposes of the solutions of the embodiments. In addition, in the accompanying drawings of the apparatus embodiments provided by this application, connection relationships between modules indicate that the modules have communication connections with each other, which may be specifically implemented as one or more communications buses or signal cables. A person of ordinary skill in the art may understand and implement the embodiments of the present invention without creative efforts.

The foregoing descriptions are merely some specific implementations of this application, but are not intended to limit the protection scope of this application.

## Claims

1. A resource scheduling method, comprising:

determining a current application scene of a device;

determining a resource management and control policy based on weights of performance, power consumption, and a temperature in the application scene; and

scheduling a resource of the device according to the resource management and control policy.

2. The method according to claim 1, wherein the determining a resource management and control policy based on weights of performance, power consumption, and a temperature in the application scene comprises:

when any one or more of a performance deterioration degree, a power consumption deterioration degree, and a temperature deterioration degree meet a preset condition, determining the resource management and control policy based on the weights of the performance, the power consumption, and the temperature in the application scene, wherein

the performance deterioration degree is used to indicate a difference between a performance parameter value of the device and a target performance indicator, the target performance indicator is a value or values of one or more performance parameters that meet performance experience in the application scene; the power consumption deterioration degree is used to indicate a difference between predicted available power and lowest available power; and the temperature deterioration degree is used to indicate a difference between a predicted housing temperature and a temperature threshold.

3. The method according to claim 2, wherein there is a correspondence between the target performance indicator and the application scene.

4. The method according to claim 3, further comprising: clustering historical scene data obtained through collection, to obtain a plurality of application scenes; and setting a corresponding target performance indicator for each application scene.

5. The method according to any one of claims 2 to 4, wherein the performance parameter value of the device is obtained through prediction based on the application scene and a current system status of the device, and the system status indicates current resource usage of the device.

6. The method according to claim 5, wherein the system status comprises resource supply information and system load information.

7. The method according to any one of claims 2 to 4, wherein the performance parameter value of the device is a performance parameter value obtained through collection.

8. The method according to any one of claims 2 to 7, wherein the power consumption deterioration degree is determined based on a power usage rule of the device and remaining power of the device, and the power usage rule reflects a historical charge status and historical power consumption status of the device.

9. The method according to claim 8, wherein the predicted available power is predicted in the following manner: predicting power consumption according to the power usage rule and a current foreground application, and obtaining the predicted available power, wherein the predicted available power is a difference between the remaining power and the power consumption.

10. The method according to claim 9, wherein the power usage rule comprises a charge cycle, a power consumption rule, and an application usage rule, wherein the charge cycle represents a historical charge interval, the power usage rule represents a plurality of historical moments and historical remaining power at each moment, and the application usage rule represents historical power consumption information of an application; and

the lowest available power is determined based on the charge cycle and according to the power usage rule, and the power consumption is determined according to the application usage rule and the foreground application.

11. The method according to claim 10, wherein the charge cycle is a time period from a current charging end moment to a next charging start moment, the power usage rule comprises the plurality of historical moments and the historical remaining power corresponding to each moment, and the application usage rule comprises information that reflects usage duration and power consumption that are of the application.

12. The method according to any one of claims 2 to 11, wherein the housing temperature is predicted based on a current housing temperature of the device, predicted values of temperature rises of a plurality of components in the device, and a weight of a temperature of each component.

13. The method according to claim 12, wherein the predicted values of the temperature rises are determined based on a temperature rise function of a component and a current resource configuration of the component.

14. The method according to any one of claims 2 to 13, wherein the temperature threshold is determined based on a temperature of an environment in which the device is currently located.

15. The method according to any one of claims 2 to 14, wherein the temperature deterioration degree comprises a first difference between a maximum value of a predicted housing temperature within a period of time and a first threshold, and a second difference between a temperature fluctuation value and a second threshold, and the temperature fluctuation value is a difference between the maximum value and a minimum value within the period of time.

16. The method according to any one of claims 1 to 15, wherein the resource management and control policy comprises any one or more of the following three policies: a computing resource scheduling policy, an application management and control policy, and a peripheral device management and control policy.

17. The method according to any one of claims 1 to 16, wherein the resource management and control policy is a resource management and control policy that makes overall user experience in the application scene optimal, and the overall user experience is obtained based on user experience of the performance, the power consumption, and the temperature and the weights of the performance, the power consumption, and the temperature in the application scene.

18. The method according to any one of claims 1 to 17, wherein machine learning or a dynamic planning method is used in a process of determining the resource management and control policy.

19. The method according to any one of claims 2 to 18, wherein the target performance indicator comprises a value or values of any one or more of the following four parameters: a target frame rate, a frame loss rate, a low frame rate percentage, and fluency, and the low frame rate percentage is a percentage of a quantity of frames whose rates are lower than the target frame rate in a total quantity of frames.

20. The method according to any one of claims 1 to 19, wherein the application scene comprises an in-application usage scene.

21. The method according to any one of claims 1 to 20, wherein the determining a resource management and control policy comprises:

    determining candidate resource management and control policies based on a performance bottleneck or a dominant hot zone of the device, wherein the candidate resource management and control policies are capable of improving the performance bottleneck or reducing a temperature of the dominant hot zone; and
    searching the candidate resource management and control policies for the resource management and control policy based on the weights of the performance, the power consumption, and the temperature.

22. The method according to any one of claims 1 to 21, wherein factors in determining the weights of the performance, the power consumption, and the temperature comprise any one or more of the following: the application scene of the device, deterioration degrees of the performance, the power consumption, and the temperature, and an effective time domain in which deteriorations in the performance, the power consumption, and the temperature are determined.

23. The method according to any one of claims 1 to 22, wherein the determining a resource management and control policy based on weights of performance, power consumption, and a temperature in the application scene comprises:

    determining the overall user experience based on the user experience and the weights of the performance, the power consumption, and the temperature; and
    determining the resource management and control policy based on the overall user experience.

24. The method according to claim 23, wherein the determining the overall user experience based on user experience satisfaction degrees and the weights of the performance, the power consumption, and the temperature comprises:

determining an experience value of the performance, an experience value of the power consumption, and an experience value of the temperature based on the performance deterioration degree, the power consumption deterioration degree, and the temperature deterioration degree, respectively, wherein the experience value is used to indicate a user experience satisfaction degree, the deterioration degree is used to indicate a difference between a target indicator and an actual indicator, and a higher deterioration degree indicates a smaller experience value; and

determining the overall user experience based on the three experience values of the performance, the power consumption, and the temperature and the weights of the performance, the power consumption, and the temperature in the application scene.

25. A resource scheduling method, comprising:

determining a current application scene of a device;
converging user experience of performance, power consumption, and a temperature based on the application scene, to obtain overall user experience; and
determining and executing a resource management and control policy based on the overall user experience.

26. The method according to claim 25, wherein the converging user experience of performance, power consumption, and a temperature based on the application scene, to obtain overall user experience comprises:
obtaining the overall user experience based on user experience of the performance, the power consumption, and the temperature and the weights of the performance, the power consumption, and the temperature in the application scene.

27. The method according to claim 25 or 26, wherein the application scene comprises an in-application usage scene.

28. The method according to any one of claims 25 to 27, wherein the determining a resource management and control policy comprises:

determining candidate resource management and control policies based on a performance bottleneck or a dominant hot zone of the device, wherein the candidate resource management and control policies are capable of improving the performance bottleneck or reducing a temperature of the dominant hot zone; and
searching the candidate resource management and control policies for the resource management and control policy based on the overall user experience, wherein the resource management and control policy meets the overall user experience.

29. The method according to any one of claims 26 to 28, wherein factors in determining the weights of the performance, the power consumption, and the temperature comprise any one or more of the following: the application scene of the device, deterioration degrees of the performance, the power consumption, and the temperature, and an effective time domain in which deteriorations in the performance, the power consumption, and the temperature are determined.

30. A computer device, wherein the computer device comprises a processor and a memory, the memory is configured to store a program, and the processor is configured to read the program and implement the method according to any one of claims 1 to 29.

31. The computer device according to claim 30, wherein the computer device is a terminal device.

32. A computer storage medium, comprising a program, wherein when the program is executed by one or more processing units, the method according to any one of claims 1 to 29 is implemented.

33. A computer program product, comprising a program, wherein when the program is executed by one or more processing units, the method according to any one of claims 1 to 29 is implemented.

Smartphone 100

| Game | WeChat (Wechat) | YouTube | Browser | ... | Application 110 |

Resource management and control apparatus

*Hardware resources*
*Software resources*
*Data resources*
*...*

Operating system 120

| Central processing unit | Graphics processing unit | DDR Memory | Hardware 130 |
| Input device | Display device | Sensor | ... |

FIG. 1

Operating system 120

Scene awareness module 121 → Resource monitoring and decision-making module 122 → Execution module 123

Resource management and control apparatus

FIG. 2a

| | |
|---|---|
| S201 | Determine a current application scene of a mobile phone |

| | |
|---|---|
| S202 | Determine a resource management and control policy based on weights of performance, power consumption, and a temperature in the application scene |

| | |
|---|---|
| S203 | Schedule a resource of the device according to the resource management and control policy |

FIG. 2b

Resource monitoring and
decision-making module

Performance
model 220

Scene-awareness
module 210

Power
consumption
model 230

Decision-making
module 250

Execution
module 260

Real-time feedback of
usage experience, *such
as an average frame
rate, a low frame rate,
fluency, and a user
interaction/operation*

Heat control
model 240

FIG. 3

Application type

Activity information

Various information
reported through
dotting in a
framework layer

System load status

Resource supply status

Average frame rate

Frame loss rate

Low frame rate percentage

Fluency

S310. Refine
scene
identification

S320. Identify
a performance
objective

*Average frame rate
Frame loss rate
Low frame rate
percentage
Fluency*

Database 301
(a correspondence
between a scene and a
performance objective)

S330. Predict a
performance
indicator

S350. Evaluate
quantization of
a performance
difference

S340. Collect
performance

FIG. 4

A charge
cycle starts

The charge
cycle ends

Lowest available
power in a time
segment 1 is $E_1^{th}$  ...

Lowest available
power in a time
segment i is $E_i^{th}$  ...

Timeline

For example, at
10:00 in the
morning,
available power
must be 80%

FIG. 5

(a) Heat
dissipation
capability
identification

1. Temperature rise rate
2. Impact of a hot zone on
a housing temperature

Hot zone
temperature
collection

(b) Housing
temperature
prediction

Predicted
housing
temperature

(e)
Temperature rise
warning
decision

(c) Dominant
hot zone
identification

Warning
temperature

(d) Ambient
temperature
identification

Different ambient
temperatures generate
different warning
temperatures

FIG. 6

Start

S701. Read temperatures of all NTCs, and store the temperatures into a status history table

S702.
If an interval between a time for outputting a current ambient temperature and a time for outputting a previous ambient temperature does not exceed an interval threshold

No

Yes

S703. Whether a mobile phone is in a charged state

Yes

No

S704.
1. Filter the temperatures of the NTCs
2. Calculate a new ambient temperature
3. Filter the calculated result and add to an ambient temperature history table

FIG. 7A

P1 —————

P2 —————

P3 —————

P4 —————

P5 —————

LTI-ROM reduced-order model

Collected temperature

Predicted ambient temperature

Predicted value

No

Calibration model

Actual value

Yes

Output an ambient temperature

FIG. 7B

*Millisecond-level awareness*

Scene awareness ── Fine-grained usage scene ──▶ Performance model

Fine-grained usage scene

Performance deterioration alarm
Performance bottleneck

Decision library

Power consumption model

*Hour-level awareness*

Power consumption deterioration alarm ──▶ Combined scheduling center ◀── Temperature rise alarm Dominant hot zone ── Heat control model

*Minute-level awareness*

Decision delivery

Execution module

Connected to the execution module:
1. Resource scheduling calculation
2. Background application management and control
3. Peripheral device management and control

FIG. 8

Application scene
(usage scene)

Time and space
dimension

Application type
dimension

In-application
scene dimension

In-application
scene parameter
dimension

System calendar

Location
aggregation
service (for
example, a scene
intelligent
service)

Application type
database

Identification
and querying on
a cloud side

Dynamic
identification on
a terminal side

Application
activity database

Framework layer
reporting

FIG. 9

Performance bottleneck

Dominant hot zone

S901  Filter a resource scheduling policy

Update a parameter

S902  Estimate user experience in a plurality of dimensions

Update a parameter

S903  Calculate and sort overall (comprehensive) user experience

S904  Deliver an optimal policy

S905 Monitor a real-time feedback

FIG. 10

860

Communications
module

810

Audio/Video
input module

Camera

Microphone

880

Power
supply

850

Processor

Neural-network
processing unit
(NPU) 890

820

Sensor

870

Memory

871

Application
programe

872

Operating
system

873

Other data

830

User input module

Touch panel

Other input device

Output module

840

Display panel

Audio output
module

FIG. 11

Main processor

External memory

Weight memory 902

Input memory 901

Operation circuit 903

Vector calculation unit 907

Accumulator 908

Storage unit access controller 905

Unified memory 906

Controller 904

Instruction fetch buffer 909

Bus interface unit 910

Neural-network processing unit (NPU) 900

FIG. 12

## INTERNATIONAL SEARCH REPORT

| International application No. |
|---|
| **PCT/CN2019/104292** |

**A. CLASSIFICATION OF SUBJECT MATTER**

G06F 1/3212(2019.01)i

According to International Patent Classification (IPC) or to both national classification and IPC

**B. FIELDS SEARCHED**

Minimum documentation searched (classification system followed by classification symbols)

G06F; H04L

Documentation searched other than minimum documentation to the extent that such documents are included in the fields searched

Electronic data base consulted during the international search (name of data base and, where practicable, search terms used)

CNKI; CNPAT; WPI; EPODOC; IEEE: 场景, 环境, 策略, 调度, 温度, 资源, 性能, 功耗, 权重, 散热, 能耗, 参数, 配置, 分配, scene, environment, policy, schedule, temperature, resource, performance, consum+, weight, parameter, configur+, allocat+

**C. DOCUMENTS CONSIDERED TO BE RELEVANT**

| Category* | Citation of document, with indication, where appropriate, of the relevant passages | Relevant to claim No. |
|---|---|---|
| PX | CN 109960395 A (HUAWEI TECHNOLOGIES CO., LTD.) 02 July 2019 (2019-07-02) claims 1-33 | 1-33 |
| X | CN 107577533 A (GUANGDONG OPPO MOBILE TELECOMMUNICATIONS CORP., LTD.) 12 January 2018 (2018-01-12) description, paragraphs 32-150 | 1-33 |
| A | CN 106774786 A (MEIZU TECHNOLOGY CO., LTD.) 31 May 2017 (2017-05-31) entire document | 1-33 |
| A | US 2015186184 A1 (ELECTRONICS AND TELECOMMUNICATIONS RESEARCH INSTITUTE) 02 July 2015 (2015-07-02) entire document | 1-33 |
| A | CN 107515787 A (GUANGDONG OPPO MOBILE TELECOMMUNICATIONS CO., LTD.) 26 December 2017 (2017-12-26) entire document | 1-33 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2019** | **03 December 2019** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/104292**

| Patent document cited in search report | | | Publication date (day/month/year) | Patent family member(s) | | | Publication date (day/month/year) |
|---|---|---|---|---|---|---|---|
| CN | 109960395 | A | 02 July 2019 | None | | | |
| CN | 107577533 | A | 12 January 2018 | WO | 2019042169 | A1 | 07 March 2019 |
| CN | 106774786 | A | 31 May 2017 | None | | | |
| US | 2015186184 | A1 | 02 July 2015 | KR | 20150075499 | A | 06 July 2015 |
| CN | 107515787 | A | 26 December 2017 | WO | 2019042171 | A1 | 07 March 2019 |

Form PCT/ISA/210 (patent family annex) (January 2015)